# EUROPÄISCHE PATENTSCHRIFT

(11) **EP 3 921 709 B1**
(45) Veröffentlichungstag und Bekanntmachung des Hinweises auf die Patenterteilung: **01.01.2025**
(21) Anmeldenummer: 20701447.3
(22) Anmeldetag: 21.01.2020
(51) Int. Cl.: G05B 19/418, B21B 37/00

(54) **VERFAHREN ZUR PRODUKTION EINES METALLWERKSTÜCKS**
METHOD FOR PRODUCING A METAL WORKPIECE
PROCÉDÉ DE PRODUCTION D'UNE PIÈCE À USINER EN MÉTAL

(30) Priorität: 07.02.2019 DE 102019103012
(43) Veröffentlichungstag der Anmeldung: 15.12.2021
(73) Patentinhaber: thyssenkrupp Hohenlimburg GmbH, 58119 Hagen (DE); thyssenkrupp AG, 45143 Essen (DE)
(72) Erfinder: SCHULZ, Marcel, 58135 Hagen (DE); KMETSCH, Stefan, 58636 Iserlohn (DE); MANTHEY, Peter, 58730 Fröndenberg (DE); EWERT, Thomas, 58097 Hagen (DE)
(74) Vertreter: Richardt Patentanwälte PartG mbB
(86) Internationale Anmeldenummer: PCT/EP2020/051354
(87) Internationale Veröffentlichungsnummer: WO 2020/160898

(56) Entgegenhaltungen:
- EP-A1- 3 216 881
- EP-A1- 3 293 594
- WO-A1-2019/012002
- WO-A2-2012/034875
- RU-C1- 2 494 826
- US-A1- 2005 178 481
- US-A1- 2017 259 313

## Beschreibung

Die Erfindung betrifft ein Verfahren zur Produktion eines gewünschten Metallwerkstücks, ein System zur Produktion eines gewünschten Metallwerkstücks ein Verfahren zur Steuerung einer Produktionsanlage eines Verarbeitungswerkes, zur Produktion eines gewünschten Metallwerkstücks eine Vorrichtung zur Steuerung einer Produktionsanlage eines Verarbeitungswerkes sowie ein Computerprogrammprodukt.

Brammen aus verschiedenen Materialien wie beispielsweise Stählen, Kupferlegierungen oder Aluminium werden beispielsweise in Stranggussanlagen hergestellt und anschließend in einem Walzwerk weiterverarbeitet.

Typischerweise erfolgt die Weiterverarbeitung mehrstufig, nämlich einerseits in einem Warmwalzwerk und anschließend in einem Kaltwalzwerk. Das Warmwalzwerk macht sich die Methodik zunutze, die Brammen auf eine entsprechende Temperatur oberhalb der Rekristallisationstemperatur zu erwärmen und im Walzspalt eines Warmwalzwerks durch Druck auf eine vorgegebene Dicke zu reduzieren. Da das Volumen der Bramme gleichbleibt, kommt es zu entsprechenden Längen- und Breitenänderungen. Aufgrund des Warmwalzvorgangs resultiert aus einer Bramme schließlich beispielsweise ein Band, welches auf einem Haspel zu einem sogenannten Coil aufgewickelt wird.

Ferner wird im Warmwalzwerk das Band in weiteren Bearbeitungsschritten weiterverarbeitet, beispielsweise durch ein Anwenden eines Beizverfahrens, eines Glühverfahrens sowie eines Spaltens das Coil, also einem Längsteilen, sodass aus einem breiten Coil mehrere schmale Einzelcoils hergestellt werden können. Im Ergebnis resultiert hieraus ein Endprodukt oder Fertigmaterial, welches nach entsprechender Verpackung einem Verarbeitungswerk wie z.B. einem Kaltwalzwerk oder auch einem Werk eines Automobilzulieferers oder allgemein eines Metallverarbeitenden Betriebes zur Verfügung gestellt werden kann.

Beim Kaltwalzen wird warmgewalztes Band bei zum Beispiel Raumtemperatur weiter dünner gewalzt und die gewünschten Verarbeitungseigenschaften eingestellt. Möglich ist auch das Versehen des kaltgewalzten Bandes beispielsweise mit einem Korrosionsschutz im Rahmen der sogenannten Adjustage.

Im Werk eines Automobilzulieferers oder allgemein eines Metallverarbeitenden Betriebes können verschiedene Verarbeitungsschritte das Band z.B. durch Stanzen, Biegen, Lackieren, Fräsen usw. zum gewünschten Metallwerkstücks weiter verarbeiten. Z.B. können hieraus Lochbleche für verschiedene Verwendungszwecke, Fahrzeugtüren, Motorhauben oder allgemein Karosserieteile, Werkzeugteile und vieles mehr als gewünschtes Metallwerkstück resultieren. Der Erfindung liegt die Aufgabe zugrunde, ein verbessertes Verfahren zur Produktion eines gewünschten Metallwerkstücks, ein entsprechendes System, ein Verfahren zur Steuerung einer Produktionsanlage eines Verarbeitungswerkes zur Produktion eines gewünschten Metallwerkstücks eine entsprechende Vorrichtung sowie ein Computerprogrammprodukt zur Verfügung zu stellen. Die der Erfindung zugrunde liegenden Aufgaben werden durch die Merkmale der unabhängigen Patentansprüche gelöst. Die Erfindung wird durch die unabhängigen Ansprüche definiert. Ausführungsformen der Erfindung sind in den abhängigen Patentansprüchen angegeben.

Im Stand der Technik offenbart US 2005 0 178 481 A1 ein Verfahren zur Optimierung eines Warm- und/oder Kaltbandwalzprozesses. RU 2 494 826 C1 offenbart die Automatisierung des Walzens und kann für das Kalt- und Warmwalzen von Bändern verwendet werden. WO 2019 012 002 A1 offenbart ein Verfahren zum Betrieb einer kontinuierlichen Verarbeitungslinie mit einem Glühschritt zur Herstellung von kontinuierlich verarbeitetem Walzband unter Verwendung eines computergestützten dynamischen Eigenschaftsvorhersagemodells. WO 2012/ 034 875 A2 offenbart ein Ermittlungsverfahren für Steuergrößen einer Walzstraße mit mehreren Walzgerüsten zum Walzen eines Metallbandes.

Es wird ein Verfahren zur Produktion eines gewünschten Metallwerkstücks angegeben, wobei das Verfahren enthält
- Herstellung eines länglichen Fertigmaterials durch Warmwalzen, wobei dem Fertigmaterial ein erster Datensatz zugeordnet ist, wobei das Fertigmaterial in seiner Längsrichtung in eine Vielzahl von ersten Segmenten logisch unterteilt ist, wobei der erste Datensatz für jedes der ersten Segmente das Segment charakterisierende erste physikalische Daten aufweist,
- Bearbeitung des Fertigmaterials durch einen Verarbeitungsprozess zum Erhalt des gewünschten Metallwerkstücks, wobei der Verarbeitungsprozess zumindest teilweise auf Basis jener ersten physikalischen Daten gesteuert wird, welche die ersten Segmente charakterisieren, welche dem Fertigmaterial logisch zugeordnet sind.

Ausführungsformen der Erfindung könnten den Vorteil haben, dass die Bearbeitung des zumindest einen Teils des Fertigmaterials durch den Verarbeitungsprozess spezifisch für diesen zumindest einen Teil des Fertigmaterial durchgeführt werden kann, indem die zugehörigen physikalischen Daten, welche die ersten Segmente charakterisieren, welche dem Teil des Fertigmaterials logisch zugeordnet sind, berücksichtigt werden. Der Verarbeitungsprozess geht also nicht automatisch davon aus, dass der zu verarbeitende Teil des Fertigmaterials in jedem Segment die gleichen physikalischen Eigenschaften aufweist, sondern er ist in der Lage, auf digitale physikalische erste Daten zurückzugreifen, welche die realen Eigenschaften des Fertigmaterials beschreiben. In entsprechender Weise kann sehr spezifisch auf diese realen physikalischen Eigenschaften des Fertigmaterials eingehend der Verarbeitungsprozess angepasst und gesteuert werden.

Allgemein und ohne Beschränkung der Allgemeinheit sei im Folgenden in einigen Beispielen davon ausgegangen, dass das Fertigmaterial zum Beispiel bandförmig vorliegt, wobei die Längsrichtung die Haupterstreckungsrichtung des Bandes meint. Das Fertigmaterial wird zum Beispiel als Coil aufgewickelt dem Verarbeitungsprozess zugeführt werden und dabei abgewickelt werden. Insofern könnte aufgrund der Segmentierung des Bandes auch von einem "digitalen Coil" gesprochen werden, welche bezüglich der Bearbeitung des Fertigmaterials Berücksichtigung findet.

Ferner sei im Folgenden ohne Beschränkung der Allgemeinheit davon ausgegangen, dass z.B. der Verarbeitungsprozess einen Kaltwalzprozess umfasst oder ein Kaltwalzprozess ist. Wie bereits oben erwähnt kann es sich bei dem Verarbeitungsprozess jedoch allgemein um einen beliebigen metallverarbeitenden Prozess handeln.

Laut Erfindung ist ein Satz von Fertigungsspezifikationen gegeben, wobei jede der Fertigungsspezifikationen erste physikalische Daten von durch den Verarbeitungsprozess herzustellenden Metallwerkstücken umfasst, wobei die Steuerung des Verarbeitungsprozesses umfasst:
- Auswertung durch Vergleich der in dem ersten Datensatz enthaltenen ersten physikalischen Daten mit den in den Fertigungsspezifikationen enthaltenen physikalischen Daten, welche der herzustellenden durch die Bearbeitung des Fertigmaterials durch den Verarbeitungsprozess herstellbar sind,
- Auswählen des gewünschten Metallwerkstücks unter den herstellbaren Metallwerkstücken für die Bearbeitung durch den Verarbeitungsprozess.

Im Beispiel eines Kaltwalzwerkes verfügt dieses über einen Satz von verschiedenen Fertigungsspezifikationen, welches zum Beispiel zulässige Dickentoleranzen von zu bearbeitendem Fertigmaterial unterschiedlich spezifizieren. Dabei könnte es sein, dass die ersten physikalischen Daten eine große Toleranzstreuung über die Länge des Fertigmaterials gesehen aufweisen, sodass nur Fertigungsspezifikatoren für zu produzierende Metallwerkstücke infrage kommen, welche überhaupt mit einer solchen Streuung von Toleranzen kompatibel sind. Dementsprechend könnte die Auswertung jene Metallwerkstücke anhand der Fertigungsspezifikation und den in dem ersten Datensatz enthaltenen ersten physikalischen Daten auswählen, welche hiermit kompatibel sind.

Das Kriterium, anhand welchem bestimmt wird, welches der herzustellenden Metallwerkstücke durch die Bearbeitung des Fertigmaterials durch den Kaltwalzprozess, allgemein des Verarbeitungsprozess "herstellbar sind" kann hier vielfältiger Natur sein. In obigem Beispiel ging es um die grundsätzliche Kompatibilität, das heißt eine einfache Ja-Nein-Entscheidung, ob die ersten physikalischen Daten mit den in der Fertigungsspezifikation enthaltenen Toleranzangaben in Einklang stehen oder nicht. Ein anderes mögliches Kriterium wäre beispielsweise, welches der herzustellenden Metallwerkstücke am effizientesten durch die Bearbeitung des Fertigmaterials durch den Verarbeitungsprozess herstellbar ist. Die Effizienz kann sich dabei auf eine Energieeffizienz oder aber auch auf eine Effizienz bezüglich der Minimierung des bei der Herstellung anfallenden Materialausschusses durch die Bearbeitung des Fertigmaterials beziehen. Die Effizienz kann sich auch auf die Herstellungsgeschwindigkeit beziehen, da unterschiedliche erste physikalische Daten durchaus einen Einfluss auf die maximale Geschwindigkeit haben, mit welcher das Fertigmaterial oder Teile davon im Kaltwalzwerk bearbeitet werden können.

Die Erfindung umfasst die Auswertung eine Bestimmung der Teile des Fertigmaterials, aus welchem die herzustellende Metallstücke zum Beispiel am effizientesten, siehe oben, und/oder mit der gewünschten Toleranz und/oder den gewünschten Fertigungsspezifikationen herstellbar sind, wobei die Bearbeitung des Fertigmaterials eine Bearbeitung des bezüglich des gewünschten Metallwerkstücks bestimmten Teils des Fertigmaterials umfasst. Es wird also nicht automatisch davon ausgegangen, dass immer ein komplettes Coil, das heißt das gesamte zur Verfügung stehende längliche Fertigmaterial durch den Kaltwalzvorgang, allgemein den Verarbeitungsvorgang bearbeitet werden muss, um ein gewünschtes Metallwerkstück herzustellen, sondern es findet zusätzlich noch eine Auswertung dahingehend statt, ob nicht bestimmte Teile des Fertigmaterials aufgrund ihrer spezifischen Eignung oder Kompatibilität dem Verarbeitungsprozess zur Herstellung des gewünschten Metallwerkstücks zugeführt werden oder aber auch davon ausgeschlossen werden.

Nach einer Ausführungsform der Erfindung umfasst die Steuerung des Verarbeitungsprozesses eine zum Erhalt des gewünschten Metallwerkstücks spezifische Festlegung von physikalischen Biegeparametern und/oder Stanzparametern und/oder Walzparametern anhand des ersten Datensatzes, wobei zum Beispiel die spezifische Festlegung der physikalischen Biegeparameter und/oder Stanzparameter und/oder Walzparameter anhand der ersten physikalischen Daten jener ersten Segmente erfolgt, welche dem zu bearbeitenden Teil des Fertigmaterials logisch zugeordnet sind. Die physikalischen Parameter umfassen zum Beispiel die Walzgeschwindigkeit und/oder eine Walzdicke und/oder eine Zwischenglühtemperatur und/oder Dressierparameter. Weitere Parameter sind eine Stanzgeschwindigkeit, Stanzkraft, die Anzahl von einzelnen Biegevorgängen, um eine finale Biegung zu erreichen, beim Stanzen oder Biegen verwendete Temperaturen inkl. Glühtemperaturen und vieles mehr.

Im Ergebnis könnte segmentspezifisch der Verarbeitungsprozess für die individuelle Bearbeitung der jeweiligen Segmente gesteuert werden, sodass im Endeffekt ein gewünschtes Metallwerkstück mit einer sehr hohen Qualität resultieren könnte. Beispielsweise ändert sich die Festigkeit beim Kaltwalzen von Stahl relativ stark in Abhängigkeit vom Walzvorgang, sodass hier eventuell zwischengeglüht werden muss, um letzten Endes die gewünschten mechanischen Eigenschaften zu gewährleisten. Da je nach Segmentbeschaffenheit die Materialdicke jedoch unterschiedlich sein kann und sich damit auch der einhergehende mechanische Walzvorgang in unterschiedlicher Weise auf die mechanischen Eigenschaften auswirken wird, könnte durch eine individuelle Anpassung der Zwischenglühtemperatur an die zuvor erfolgte mechanische Bearbeitung, welche wiederum von den ersten physikalischen Raten abhängig ist (zum Beispiel der Dicke) gesteuert werden, sodass insgesamt über die gesamte zum Beispiel Bandlänge eine mechanische Beschaffenheit hoher Gleichmäßigkeit gewährleistet werden könnte.

Die Erfindung umfasst die Bearbeitung des Fertigmaterials eine Erfassung zweiter physikalischer Daten jener ersten Segmente, welche dem zu bearbeitenden Fertigmaterial logisch zugeordnet sind, wobei die ersten physikalischen Daten mit den zweiten physikalischen Daten plausibilisiert werden und auf der Basis der Plausibilisierung eine Optimierung von Messsystemen erfolgt, anhand welcher die ersten und/oder zweiten physikalischen Daten erfasst wurden oder wobei auf Basis der Plausibilisierung eine Bearbeitung von weiterem durch das Warmwalzen herzustellende Fertigmaterial angepasst oder gestoppt wird. Verfügen beispielsweise die Messsysteme, anhand welcher die ersten und zweiten physikalischen Daten erfasst wurden, über eine unterschiedliche Erfassungsqualität, könnte das Messsystem niedriger Erfassungsqualität mit den Messergebnissen des Messsystems der höheren Erfassungsqualität optimiert werden. So könnten beispielsweise Ausreißer in Messungen einfacher detektiert werden und die durch das Messsystem niedrigerer Qualität erhaltenen Messergebnisse in entsprechender Weise geglättet werden. Ferner ist es zum Beispiel möglich, über Machine-Learning-Algorithmen die Messergebnisse des Messsystems der geringeren Qualität zu optimieren, wobei die Machine-Learning-Algorithmen oder das Machine-Learning-Modell in sehr einfacher Weise durch die von beiden Messsystemen zur Verfügung gestellten physikalischen Daten trainiert werden könnte. Auf diese Art und Weise könnte auch das Messystem der niedrigeren Erfassungsqualität mit hoher Zuverlässigkeit zum Einsatz kommen, um z.B. Prozesse des Warm- oder Verarbeitungswerkes, insbesondere des Kaltwalzwerkes zu steuern, auch wenn gerade keine Plausibilisierung mit anderen physikalischen Daten des anderen Messystems stattfindet.

Wie bereits erwähnt ist es auch möglich, auf der Basis der Plausibilisierung eine Bearbeitung von weiterem, durch das Warmwalzen herzustellenden Fertigmaterial anzupassen oder zu stoppen. Wird beispielsweise festgestellt, dass eine Dickenangabe des Fertigmaterials, wie sie in den ersten physikalischen Daten angegeben ist, nicht mit der entsprechenden Dickenmessung der zweiten physikalischen Daten übereinstimmt, so könnte dies darauf hindeuten, dass in einem der letzten Dickenbestimmung im Warmwalzwerk nachgelagerten Materialbearbeitung ein Problem vorliegt, welches zu einer unerwarteten Dickenreduktion des Fertigmaterials führt. Üblicherweise wird beispielsweise in einem Beizprozess im Warmwalzwerk nur eine vorbestimmte geringe Dickenreduktion des warmgewalzten Bandes eintreten, wobei im Falle dessen diese Dickenreduktion über den zu erwartenden Werten liegt, vermutlich ein Produktionsproblem beim Beizvorgang vorliegen könnte. Durch die Plausibilisierung ist es daher möglich, eventuell entstehenden Ausschuss bei der Produktion weiteren herzustellenden Fertigmaterials zu verhindern. Die Anlage des Warmwalzwerks kann in entsprechender Weise daraufhin optimiert und angepasst werden.

Nach einer Ausführungsform der Erfindung umfasst das Verfahren ferner den Vergleich des realen Gewichts des Fertigmaterials mit einem theoretischen Gewicht, wobei das theoretische Gewicht aus den ersten physikalischen Daten berechnet wird. Im Falle dessen, dass das reale Gewicht von dem theoretischen Gewicht um mehr als einen vordefinierten Toleranzwert abweicht, erfolgt eine Ausgabe eines Signals über eine Nutzerschnittstelle. So könnte entweder aufseiten des Warmwalzwerks beim Materialausgang, zum Beispiel dem Verpacken des hergestellten Fertigmaterials, oder aber auch beim Wareneingang des Verarbeitungswerkes, das heißt beim Empfang des Fertigmaterials, überprüft werden, ob tatsächlich das Fertigmaterial in der gewünschten Menge vorliegt oder nicht. Beispielsweise kann über die kontinuierliche, über die Länge des Fertigmaterials, über die Segmente spezifizierte Breite und Dicke des Materials berechnet werden, wie bezüglich der gesamten Länge des Fertigmaterials ein entsprechendes Versandgewicht, das heißt Endgewicht des Fertigmaterials, zu sein hat. Ergibt sich hier die besagte Abweichung, welche mehr ist als der vordefinierte Toleranzwert, so könnte dies beispielsweise auf fehlerbehaftete Messsysteme zur Bestimmung der ersten oder zweiten physikalischen Daten oder bei der Umrechnung von Messwerten in die ersten oder zweiten physikalischen Daten vorhandene Fehler hindeuten.

Eine Nutzerschnittstelle kann eine Human-to-Machine (H2M) Schnittstelle zwischen einem Endgerät oder Software-Modul und dem Menschen darstellen, wobei die übertragenen Signale (Ereignisse) manuell weiterverarbeitet werden. Dazu gehören digitale und analoge Anzeigevorrichtungen, grafischer Benutzeroberflächen, sprachgesteuerte Benutzerschnittstellen, die Verwendungen von Applikationen zur Anzeige und Wiedergabe des Signals auf mobilen Telekommunikationsgeräten und vieles mehr. Möglich ist auch, dass eine Nutzerschnittstelle eine Machine-to-Machine (M2M) Schnittstelle für eine Kommunikation zwischen zwei Endgeräten oder Software-Modulen ist. Hier werden die übertragenen Signale (Ereignisse) nach vorgegebener Logik vollautomatisiert verarbeitet.

Nach einer Ausführungsform der Erfindung erfolgt die Herstellung des Fertigmaterials durch Warmwalzen durch mehrere Verarbeitungsschritte durch nacheinandergeschaltete Fertigungseinheiten, wobei aufgrund der Verarbeitung durch die Fertigungseinheiten jeweils ein längliches Zwischenprodukt z.B. in Bandform resultiert, wobei aufgrund der Verarbeitung durch die letzte der Fertigungseinheiten als Zwischenprodukt das Fertigmaterial resultiert.

Zum Beispiel ist einem gegebenen Zwischenprodukt der Zwischenprodukte ein zweiter Datensatz zugeordnet, wobei das gegebene Zwischenprodukt in seiner Längsrichtung ebenfalls in eine Vielzahl von zweiten Segmenten logisch unterteilt ist, wobei der zweite Datensatz für jedes der zweiten Segmente das Segment charakterisierende dritte physikalische Daten aufweist, wobei die Verarbeitung des gegebenen Zwischenprodukts zum Fertigmaterial die physikalischen Daten des Zwischenprodukts in vorbekannter Weise beeinflusst, wobei die ersten physikalischen Daten aus den dritten physikalischen Daten berechnet werden und das Berechnen die vorbekannte Beeinflussung berücksichtigt.

Zum Beispiel umfasst die vorbekannte Beeinflussung eine mechanische und/oder geometrische Beeinflussung.

Dies könnte den Vorteil haben, dass einerseits entsprechende Messsysteme nicht mehrfach vorgesehen werden müssen, um damit für jede der Fertigungseinheiten den Warmwalzprozess zu steuern oder zu überwachen oder zu protokolieren und außerdem am Schluss die benötigten ersten physikalischen Daten zur Verfügung stehen zu haben. Beeinflusst eine Verarbeitung des gegebenen Zwischenprodukts zum Fertigmaterial die physikalische Eigenschaften des Zwischenprodukts in vorbekannter Weise, reicht es aus, einerseits die für die Verarbeitung zuständige Verarbeitungseinheit anhand dieser physikalischen Daten zu steuern und andererseits aus den dritten physikalischen Daten durch die Vorkenntnis der vorbekannten Beeinflussung die ersten physikalischen Daten theoretisch zu berechnen, welche aus der Verarbeitung des gegebenen Zwischenprodukts resultieren werden.

Die Gründe, weshalb eine Messung oder Bestimmung von Teilen der ersten physikalischen Daten nicht vorgenommen werden soll und stattdessen zumindest teilweise diese ersten physikalischen Daten aus dritten physikalischen Daten berechnet werden, können dabei vielfältig sein. Ein Beispiel ist hier das Spalten des Coils, sodass im einfachsten Fall aus einem Coil mit einer gegebenen Breite zwei einzelne Coils mit einer jeweils geringeren Breite resultieren werden. Da der Spaltprozess das Coil in einer vordefinierten Weise bearbeitet, könnte es zum Beispiel ausreichen, dass als dritte physikalische Daten vor Spaltung des Coils die Breite des Coils segmentsspezifisch aufgenommen wurde, sodass daraus für jedes nach der Spaltung resultierende Coil die entsprechende segmentspezifische Coilbreite (Bandbreite) als Teil der ersten physikalischen Daten berechnet werden kann - es sind hier also keine zwei Messvorgänge zur Bestimmung der Breite notwendig, sondern es ist nur ein vorgelagerter einziger Messvorgang für die Breite notwendig.

Nach einer Ausführungsform der Erfindung unterscheidet sich die Geometrie des Fertigmaterials von der Geometrie des gegebenen Zwischenprodukts, wobei die vorbekannte Beeinflussung den Geometrieunterschied umfasst, wobei das Berechnen der ersten physikalischen Daten aus den dritten physikalischen Daten eine aus dem Geometrieunterschied resultierende Zuordnung der zweiten Segmente zu den ersten Segmenten berücksichtigt. Beispielsweise könnte der Geometrieunterschied aus einer Streckung des gegebenen Zwischenprodukts aufgrund eines Walzvorgangs resultieren, sodass aus ursprünglich zweiten Segmenten mit beispielsweise 10 cm Länge (in Längsrichtung des Fertigmaterials gesehen) nach dem Walzvorgang gestreckte erste Segmente mit 30 cm Länge werden. Um nach wie vor die dritten physikalischen Daten zu den ersten physikalischen Daten umzurechnen, ist also die aus dem Geometrieunterschied resultierende Streckung der zweiten Segmente zu den ersten Segmenten und damit die entsprechende logische Positionierung der ersten Segmente auf dem hergestellten Fertigmaterial zu berücksichtigen.

Nach einer Ausführungsform der Erfindung umfasst das Verfahren eine Plausibilisierung der ersten physikalischen Daten mit den dritten physikalischen Daten und dem Geometrieunterschied, wobei im Falle dessen eine Plausibilisierung nicht möglich ist, wiederum ein Signal über eine Nutzerschnittstelle ausgegeben wird. Dies wiederum kann im Warmwalzwerk erfolgen. Sind beispielsweise dritte physikalische Daten bekannt, welche eine segmentsspezifische Dicke des Zwischenprodukts angeben und sorgt ein nachgelagerter Fertigungsschritt dafür, dass aufgrund des Walzvorgangs die Dicke in vordefinierter Weise reduziert und damit die Länge in entsprechender Weise erhöht werden wird, so können in dem nachgelagerten Fertigungsschritt gemessene Längenangaben bezüglich des hergestellten Fertigmaterials als erste physikalische Daten dazu herangezogen werden, eine Plausibilisierung mit den dritten physikalischen Daten bezüglich der Dicke vorzunehmen.

Nach einer Ausführungsform der Erfindung erfolgt die Verarbeitung eines gegebenen Zwischenprodukts der Zwischenprodukte mit Betriebsparametern der für die Verarbeitung durchführenden Fertigungseinheit, wobei aus der Verarbeitung des gegebenen Zwischenprodukts eine den ersten Segmenten zuordenbare Bearbeitung des Zwischenprodukts mit den jeweiligen Betriebsparametern resultiert, wobei die ersten physikalischen Daten spezifisch für die ersten Segmente die bei der jeweiligen Verarbeitung verwendeten Betriebsparameter umfassen.

Zum Beispiel umfassen die Betriebsparameter: eine bei der Verarbeitung auf das jeweilige verarbeitete Zwischenprodukt einwirkende Kraft und/oder Temperatur und/oder eine Verarbeitungsgeschwindigkeit und/oder eine Balligkeit einer bei der Verarbeitung durch die Fertigungseinheit verwendeten Walze.

Die spezifische Kenntnis der bei der Verarbeitung des Zwischenprodukts verwendeten Betriebsparameter der entsprechenden Fertigungseinheit könnte es ebenfalls ermöglichen, die nachfolgende Bearbeitung des Fertigmaterials segmentsspezifisch optimiert durch das Verarbeitungswerk, z.B. das Kaltwalzwerk durchzuführen. Beispielsweise könnte segmentsspezifisch ein Betriebsparameter Einfluss auf die mechanischen Festigkeitseigenschaften des Fertigmaterials haben, zum Beispiel auf die Zähigkeit, die Dehnbarkeit, die elastischen Eigenschaften usw. Um nun die gewünschten mechanischen Eigenschaften des gewünschten Metallwerkstücks homogen für alle Segmente im Verarbeitungswerk einzustellen, könnten die segmentsspezifische Betriebsparameter hierfür herangezogen werden. Dies bedeutet zum Beispiel, dass nicht nur konkrete Messergebnisse z.B. in Form von geometrischen die Segmente charakterisierenden Daten zur Steuerung des Verarbeitungsprozesses verwendet werden können, sondern auch Betriebsparameter, aus welchen sich wiederum bestimmte physikalische Eigenschaften segmentsspezifisch für das Fertigmaterial bestimmen lassen.

Nach einer Ausführungsform der Erfindung weisen die ersten, zweiten und/oder dritten physikalischen Daten bezogen auf ein gegebenes Segment zumindest eines der folgenden auf: einen Absolutwert und/oder einen Mittelwert und/oder ein Minimum und/oder ein Maximum und/oder eine Standardabweichung.

Zum Beispiel beschreiben die ersten, zweiten und/oder dritten physikalischen Daten bezogen auf ein gegebenes Segment zumindest eine der folgenden Eigenschaften des Segments: mechanische Eigenschaften und/oder geometrische Eigenschaften.

In einem weiteren Aspekt betrifft die Erfindung ein System zur Produktion eines gewünschten Metallwerkstücks, wobei das System ausgebildet ist zur:
- Herstellung eines länglichen Fertigmaterials durch Warmwalzen, wobei dem Fertigmaterial ein erster Datensatz zugeordnet ist, wobei das Fertigmaterial in seiner Längsrichtung in eine Vielzahl von ersten Segmenten logisch unterteilt ist, wobei der erste Datensatz für jedes der ersten Segmente das Segment charakterisierende erste physikalische Daten aufweist,
- Bearbeitung des Fertigmaterials durch einen Verarbeitungsprozess zum Erhalt des gewünschten Metallwerkstücks, wobei der Verarbeitungsprozess zumindest teilweise auf Basis jener ersten physikalischen Daten gesteuert wird, welche die ersten Segmente charakterisieren, welche dem Fertigmaterial logisch zugeordnet sind.

In einem weiteren Aspekt betrifft die Erfindung eine Vorrichtung zur Steuerung einer Produktionsanlage eines Verarbeitungswerkes, insbesondere eines Kaltwalzwerkes, wobei die Vorrichtung einen Prozessor und einen Speicher mit Programminstruktionen aufweist, wobei die Ausführung der Programminstruktionen die die Produktionsanlage des Verarbeitungswerkes steuert zum:
- Empfangen eines ersten Datensatzes, wobei dem Fertigmaterial der erste Datensatz zugeordnet ist, wobei das Fertigmaterial in seiner Längsrichtung in eine Vielzahl von ersten Segmenten logisch unterteilt ist, wobei der erste Datensatz für jedes der ersten Segmente das Segment charakterisierende erste physikalische Daten aufweist,
- Bearbeiten des Fertigmaterials durch einen Verarbeitungsprozess zum Erhalt des gewünschten Metallwerkstücks, wobei der Verarbeitungsprozess zumindest teilweise auf Basis jener ersten physikalischen Daten, welche die ersten Segmente charakterisieren, welche dem Fertigmaterial logisch zugeordnet sind.

In einem weiteren Aspekt betrifft die Erfindung eine Vorrichtung zur Steuerung einer Produktionsanlage eines Verarbeitungswerkes, wobei die Vorrichtung einen Prozessor und einen Speicher mit Programminstruktionen aufweist, wobei die Ausführung der Programminstruktionen die die Produktionsanlage des Verarbeitungswerkes steuert zum:
- Empfangen eines ersten Datensatzes, wobei dem Fertigmaterial der erste Datensatz zugeordnet ist, wobei das Fertigmaterial in seiner Längsrichtung in eine Vielzahl von ersten Segmenten logisch unterteilt ist, wobei der erste Datensatz für jedes der ersten Segmente das Segment charakterisierende erste physikalische Daten aufweist,
- Bearbeiten des Fertigmaterials durch einen Verarbeitungsprozess zum Erhalt des gewünschten Metallwerkstücks, wobei der Verarbeitungsprozess zumindest teilweise auf Basis jener ersten physikalischen Daten, welche die ersten Segmente charakterisieren, welche dem Fertigmaterial logisch zugeordnet sind.

In einer weiteren Ausführungsform umfasst die Erfindung ein Computerprogrammprodukt von einem Prozessor ausführbaren Instruktionen zur Steuerung des Verfahrens.

Der Fachmann wird verstehen, dass Aspekte der vorliegenden Erfindung als Gerät, Verfahren oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RWoder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-D ienstanbieters).

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungsvorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

Im Folgenden werden Ausführungsformen der Erfindung anhand der Zeichnungen näher erläutert. Es zeigen:
- Figur 1: ein Blockdiagramm eines Systems zur Herstellung eines gewünschten Metallwerkstücks,
- Figur 2: ein Blockdiagramm eines Systems zur Herstellung eines gewünschten Metallwerkstücks,
- Figur 3: ein Flussdiagramm eines Verfahrens zur Herstellung eines gewünschten Metallwerkstücks.

Im Folgenden sind einander ähnliche Elemente u.A. mit den gleichen Bezugszeichen gekennzeichnet.

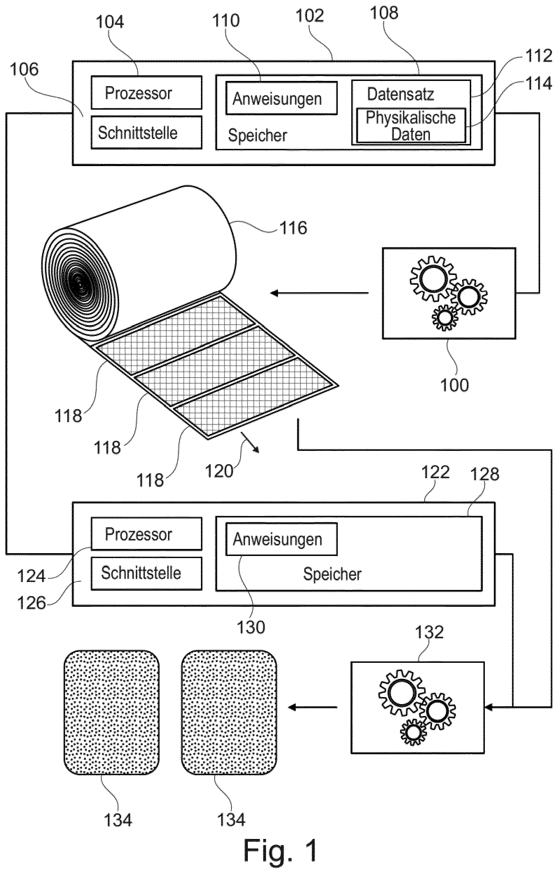

Die Figur 1 zeigt ein Blockdiagramm eines Systems, welches ein Modul 102 zur Steuerung eines Warmwalzwerkes 100 und ein Modul 122 zur Steuerung eines Verarbeitungswerkes 132 aufweist. Die Module 102 bzw. 122 verfügen jeweils über einen Prozessor 104 bzw. 124, eine Kommunikationsschnittstelle 106 bzw. 126 und einen Speicher 108 bzw. 128 mit entsprechenden Programmanweisungen 110 bzw. 130. Im Folgenden sei davon ausgegangen, dass es sich beispielhaft bei dem Verarbeitungswerk um ein Kaltwalzwerk handelt.

Durch das Warmwalzwerk 100 wird ein Fertigmaterial 116 hergestellt. Ohne Beschränkung der Allgemeinheit sei im Folgenden davon ausgegangen, dass es sich bei dem länglichen Fertigmaterial um ein Metallband handelt, welches zu einem Coil aufgewickelt werden kann. Es sei jedoch darauf verwiesen, dass es sich allgemein bei dem Fertigmaterial um Band, Grobblech, Profile, Stabelemente und Ähnliches handeln kann.

Es wird also z.B. ein Coil 116 hergestellt, welche in Längsrichtung 120 des zum Coil 116 aufgewickelten Bandes logisch in verschiedene Segmente 118 unterteilt ist. Bezüglich jedes Segmentes 118 sind im Speicher 108 physikalische Daten 114 hinterlegt. Die physikalischen Daten in ihrer Gesamtheit sind Teil eines Datensatzes 112, welcher im Speicher 108 hinterlegt ist. Bei den physikalischen Daten kann es sich beispielsweise spezifisch für jedes der Segmente um eine Segmentenbreite, Segmentenlänge, Segmentendicke, ein Dickenprofil des Segmentes in Abhängigkeit von Länge und Breite und vieles mehr handeln.

In dem Beispiel der Figur 1 ist das Modul 102 in der Lage, das Warmwalzwerk 100 zur Produktion des Coils 116 zu steuern. Möglich ist jedoch auch, dass eine entsprechende Steuerungseinheit für die Steuerung des Warmwalzwerks 100 separat von dem Modul 102 vorgesehen ist und das Modul 102 lediglich für die Speicherung bzw. Erfassung der physikalischen Daten 114 und beispielsweise deren Übermittlung von der Schnittstelle 106 zur Schnittstelle 126 des Moduls 122 vorgesehen ist.

Das Coil 116 kann im Kaltwalzwerk 132 weiterverarbeitet werden, um hieraus ein oder mehrere gewünschte Metallwerkstücke 134, zum Beispiel Feinblechelemente 134, herzustellen. Hier sei ohne Beschränkung der Allgemeinheit davon ausgegangen, dass das durch Kaltwalzen produzierte gewünschte Metallstück ein kaltgewalztes Feinblech ist. Beim herzustellenden gewünschten Metallwerkstück kann es sich allgemein um Feinblech, Feinstblech, Bänder und ebenfalls Profile verschiedenster Geometrie handeln.

Der Kaltwalzprozess (allgemein Verarbeitungsprozess) wird dabei durch das Modul 122 zumindest teilweise auf Basis der physikalischen Daten 114 gesteuert, welche die Segmente 118 charakterisieren, welche dem Fertigmaterial 116, also dem Coil, logisch zugeordnet sind. Die Anweisungen 130 sorgen also dafür, dass die Bearbeitung des Coils 116 durch den Kaltwalzprozess zumindest auf Basis der physikalischen Daten 114 beeinflusst wird.

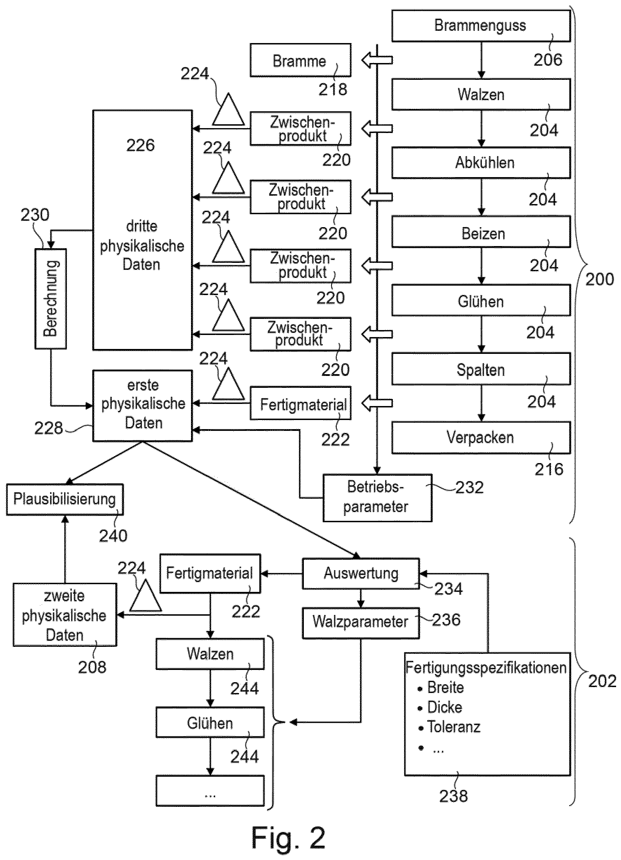

Die Figur 2 zeigt ein Blockdiagramm mit einer Produktionsanlage 200 eines Warmwalzwerkes und einer Produktionsanlage 202 eines Kaltwalzwerkes. Die Produktionsanlage des Warmwalzwerkes umfasst verschiedene Fertigungseinheiten 204, auch als Aggregate bezeichnet. Nicht Teil der Produktionsanlage ist beispielsweise eine Strangusanlage, welche einen Brammenguss durchführt. Nichtsdestotrotz ist die Strangusanlage der Vollständigkeit halber im Blockdiagramm der Figur 2 mit Bezugszeichen 206 gekennzeichnet aufgenommen, da die aus dem Brammenguss resultierende Bramme 218 üblicherweise der Ausgangspunkt für die nachfolgenden Bearbeitungsschritte ist.

Die hergestellte Bramme 218 kann beispielsweise in einem Warmwalzvorgang in einem entsprechenden Aggregat 204 zu einem Band gewalzt werden, wobei hier als Zwischenprodukt 220 ein heißes gewalztes Band resultiert. Dem nachgeschaltet ist die Fertigungseinheit 204 "Abkühlen", wobei nach dem Abkühlen ein gekühltes Band resultiert, welches nach Haspeln auf einer Haspel zu einem Zwischenprodukt 220 "Coil" wird. Auch dieses Zwischenprodukt kann weiterverarbeitet werden, indem es beispielsweise nach Abwickeln des Bandes von dem Coil durch die Fertigungseinheit 204 "Beizen" gebeizt wird und dann wieder gehaspelt wird, wobei als Zwischenprodukt 220 hieraus ein gebeiztes Coil resultiert.

Dem nachgeschaltet ist die Fertigungseinheit "Glühen" 204, wobei hieraus als Zwischenprodukt 220 ein geglühtes Coil resultiert. Der letzte Schritt ist das Spalten durch die Fertigungseinheit "Spalten" 204, wobei hieraus schließlich als Endprodukt ein gespaltenes Coil resultiert. Dies ist ein aufgewickeltes Band und damit zum Beispiel das obig beschriebene längliche Fertigmaterial 222. Dieses Fertigmaterial 222 kann in einem Verarbeitungsschritt 216 "Verpacken" durch eine entsprechende Verpackungseinheit verpackt und daraufhin dem Kaltwalzwerk zur Verfügung gestellt werden.

Es sei angemerkt, dass die Abfolge der Verarbeitungsschritte des Zwischenprodukts zum Endprodukt durchaus variieren kann und im Rahmen der vorliegenden Beschreibung nicht als fest angesehen werden darf. Z.B. kann das Glühen durchaus vor dem Beizen stattfinden. Einzelne Fertigungsschritte wie z. B. das Glühen oder Längsteilen sind nicht zwingend erforderlich und können je nach Kundenspezifikation auch komplett entfallen.

Im Bereich des Warmwalzwerkes 200 ist ein Sensor 224 vorgesehen, welcher erste physikalische Daten 228 des Fertigmaterials 222 erfasst. Diese ersten physikalischen Daten werden, wie obig beschrieben, segmentsspezifisch erfasst und in Form eines ersten Datensatzes gespeichert und dem Fertigmaterial 222 zugeordnet. Da es sich bei dem Fertigmaterial 222 um ein Coil handelt, wird bei der "Ergänzung" des Coils mit den ersten physikalischen Daten auch von einem "digitalen Coil" gesprochen, welche das Coil nahezu vollständig physikalisch charakterisiert. Ebenfalls Teil der ersten physikalischen Daten 228 können Betriebsparameter 232 sein, mittels welcher die einzelnen Fertigungseinheiten 204 die entsprechenden Zwischenprodukte und auch das Fertigmaterial hergestellt haben. Betriebsparameter 232 können bei der Verarbeitung verwendete Kräfte, Temperaturen, Verarbeitungsgeschwindigkeiten usw. umfassen. Auch diese Betriebsparameter 232 können segmentsspezifisch als erste physikalische Daten 228 in dem entsprechenden Datensatz enthalten sein. Möglich ist auch, dass die Betriebsparameter 232 und/oder die durch die Sensoren 224 erfassten Werte weiterverarbeitet und nach Weiterverarbeitung als die ersten physikalischen Daten 228 gespeichert werden.

Eine weitere Möglichkeit besteht darin, dass die einzelnen Zwischenprodukte 220 über entsprechende Sensoren 224 analysiert werden und das entsprechende Analyseergebnis als sogenannte dritte physikalische Daten 226 einer Berechnung 230 unterzogen wird. Die Berechnung 230 macht dabei zum Beispiel eine Prognose, wie sich aus den dritten physikalischen Daten die ersten physikalischen Daten 228 nach Weiterverarbeitung des jeweiligen Zwischenprodukts 220 zum Fertigmaterial ergeben werden. Die Berechnung 230 ist dabei optional und kann zum Beispiel dann zum Einsatz kommen, wenn sich aufgrund einer oder mehrerer nachfolgender Bearbeitungsschritte 204 das Zwischenprodukt in genau definierter Weise verändert, sodass es ausreichend ist, einmalig die entsprechenden physikalischen Daten zu erfassen und dann bezüglich der weiteren Verarbeitungsschritte zu extrapolieren bzw. die Entwicklung der entsprechenden physikalischen Daten vorherzusagen. Die dritten physikalischen Daten können auch unverändert als erste physikalische Daten übernommen werden, wenn nicht davon ausgegangen werden muss, dass sich die physikalischen Daten aufgrund der Weiterverarbeitung des Zwischenprodukts zum Fertigmaterial in irgendeiner Weise ändern.

Seitens des Kaltwalzwerkes 202 ist ein Auswertungsmodul 234 gegeben, welches beispielsweise in Form der Anweisungen 130 im Modul 122 (vergleiche Figur 1) implementiert sein kann. Wird nun das als Fertigmaterial 222 durch das Warmwalzwerk hergestellte Coil der Weiterverarbeitung im Kaltwalzwerk unterworfen, so kann die Steuerung der verschiedenen Weiterbearbeitungsschritte anhand der physikalischen Daten 228 erfolgen, indem hieraus entsprechende physikalische Walzparameter 236 erzeugt oder angepasst werden. Auch dies kann wiederum segmentsspezifisch erfolgen, wobei die Walzparameter 236 zum Beispiel eine Geschwindigkeit eines Walzvorgangs oder eine Glühtemperatur eines Glühvorgangs umfassen kann, welche durch nacheinandergeschaltete Aggregate 244 "Walzen" und "Glühen" bewirkt werden.

Der Fachmann versteht, dass es sich beim Walzen mittels des Aggregats 244 um einen beispielhaften Vorgang im Kaltwalzwerk handelt, bei welchem beispielsweise das gebeizte Band als Endlosband weiter in seiner geometrischen Form bearbeitet wird, um z.B. einen hohen Umformgrad bei engen Toleranzen und guter Oberflächenqualität zu gewährleisten. Das beim Kaltwalzen verfestigte Material kann zur Wiederherstellung der Umformeigenschaften für die weitere Verarbeitung "rekristallisierend" geglüht werden. Weitere im Folgenden nicht näher diskutierte Schritte sind beispielsweise das Dressieren, wobei eine Streckgrenze beseitigt und die Blechoberfläche geglättet bzw. gezielt aufgeraut und verdichtet wird, sowie eine Adjustage, bei welcher beispielsweise das Material in Umwickelanlagen auf Oberflächenfehler inspiziert und mit einem Korrosionsschutz versehen werden kann. Ebenfalls ist hier ein Längsteilen und Zuschneiden auf entsprechende gewünschte geometrische Formen möglich. All dies kann durch entsprechende Aggregate 244 realisiert werden.

Beispielsweise kann das Auswertungsmodul 234 auf eine Datenbank 238 mit verschiedenen Fertigungsspezifikationen für unterschiedliche herzustellende Metallwerkstücke zugreifen. Die Fertigungsspezifikationen enthalten beispielsweise pro herzustellendem Metallwerkstück, beispielsweise pro herzustellendem Feinblechband, eine gewünschte Breite, eine gewünschte Dicke, hierzu entsprechende Toleranzvorgaben, Materialvorgaben usw. In Abhängigkeit von den ersten physikalischen Daten 228, welche dem Modul 234 zur Verfügung gestellt werden, ist nun das Modul 234 in der Lage, durch Vergleich der ersten physikalischen Daten 228 mit den in den Fertigungsspezifikationen 238 enthaltenen physikalischen Daten das Metallwerkstück auszuwählen, welches durch die Bearbeitung des Coils 222 durch den Kaltwalzprozess insbesondere optimal herstellbar ist. Beispielsweise könnten in den Fertigungsspezifikationen 238 für ein bestimmtes herzustellendes Metallwerkstück die Toleranzangaben bezüglich der Dicke des hierzu zu verwendenden Bandes recht eng sein und das Fertigmaterial 222 genau diese engen Toleranzangaben erfüllen, sodass das Modul 234 dann auch tatsächlich das Fertigmaterial 222 dieser Fertigungsspezifikation 238 zuordnet. Wenn umgekehrt Fertigungsspezifikationen mit engeren und breiteren Toleranzbereichen gegeben sind und das Fertigmaterial 222 den engeren Toleranzbereich nicht erfüllt, könnte daraufhin das Modul 234 bestimmen, dass aus dem Fertigmaterial 222 das gewünschte Metallwerkstück mit dem größeren Toleranzbereich herzustellen ist.

Aufseiten des Kaltwalzwerkes 202 wird ferner mittels eines Sensors 224 das Fertigmaterial 222 analysiert. Beispielsweise werden zweite physikalische Daten des Fertigmaterials beim Abwickeln des Coils für den nachfolgenden Walzvorgang erfasst und einem Modul 240 zugeführt. Das Modul 240 kann in Form der Anweisungen 110 im Speicher 108 des Moduls 102 enthalten sein und führt eine Plausibilisierung dahingehend durch, ob beispielsweise segmentsspezifisch die ersten physikalischen Daten 228 und die zweiten physikalischen Daten 208 plausibel zueinanderpassen oder nicht. Ergibt sich, dass eine Plausibilisierung der ersten und zweiten physikalischen Daten zueinander nicht möglich ist, kann dies verschiedene Schritte nach sich ziehen. Eine Möglichkeit ist eine Optimierung, Anpassung oder Reparatur der Sensoren 224. Möglich ist ferner eine Anpassung des Produktionsprozesses seitens des Warmwalzwerkes, um offensichtlich nach Erfassung der nicht plausibilisierbaren ersten physikalischen Daten auftretende Materialmodifikationen der Zwischenprodukte 220 bzw. des Fertigmaterials 222 zu berücksichtigen usw.

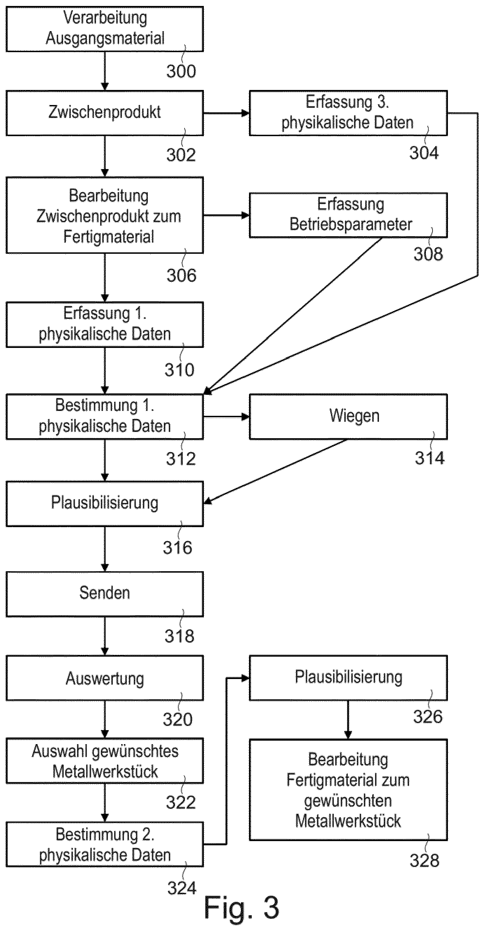

Die Figur 3 zeigt ein Flussdiagramm eines Verfahrens zur Produktion eines gewünschten Metallwerkstücks, wobei hier nochmals auf die Figur 2 zum Zwecke der Erläuterung eingegangen werden soll. Das Verfahren startet in Schritt 300 mit der Verarbeitung des Ausgangsmaterials, wobei hier aus jedem Verarbeitungsschritt ein entsprechendes Zwischenprodukt in Schritt 302 resultiert. Es handelt sich hierbei um eines der Zwischenprodukte 220. Optional ist es möglich, bezüglich jeder der Zwischenprodukte eine in Schritt 304 erfolgende Erfassung dritter physikalischer Daten durchzuführen.

Das in Schritt 302 hergestellte Zwischenprodukt wird in Schritt 306 weiterverarbeitet, um schließlich hieraus das Fertigmaterial zu erhalten. Die bei der Bearbeitung des Zwischenprodukts zum Fertigmaterial verwendeten Betriebsparameter des Warmwalzwerks können im optionalen Schritt 308 erfasst werden. Grundsätzlich ist es möglich, in jedem Verarbeitungsschritt segmentsspezifisch die dritten physikalischen Daten und die Betriebsparameter zu erfassen. Nach Schritt 306 erfolgt im Schritt 310 das Erfassen z.B. eines Teils der ersten physikalischen Daten des Fertigmaterials, wobei hier beispielsweise das Fertigmaterial abgescannt und vermessen werden kann. Es ist allerdings auch möglich, dass die ersten physikalischen Daten des Fertigmaterials bereits vollständig vor Schritt 306 erfasst oder bestimmt wurden, z.B. aus den in Schritt 304 erfassten dritten physikalischen Daten bestimmt wurden, z.B. durch Berechnung oder unveränderte Übernahme.

In Schritt 312 erfolgt eine Bestimmung der ersten physikalischen Daten, was beispielsweise ein Sammeln der in Schritt 310 erfassten ersten physikalischen Daten sowie ein Berechnen weiterer erster physikalischer Daten aus den dritten physikalischen Daten (aus Schritt 304) umfassen kann. Außerdem können die in Schritt 310 erfassten ersten physikalischen Daten durch die in Schritt 308 erfassten Betriebsparameter ergänzt werden. Eine Berechnung der ersten physikalischen aus den dritten physikalischen Daten ist beispielsweise dadurch möglich, dass eine durch den Bearbeitungsschritt 306 resultierende Geometrieänderung des Zwischenprodukts aus Schritt 302 segmentsspezifisch berücksichtigt wird.

In dem Beispiel der Figur 3 erfolgt in Schritt 314 ein optionaler Wiegevorgang des Fertigmaterials, wobei daraufhin anhand der ersten physikalischen Daten und dem Gesamtgewicht in Schritt 316 eine Plausibilisierung vorgenommen werden kann, ob das erzeugte Fertigmaterial auch tatsächlich gewichtsmäßig dem Fertigmaterial entsprechen kann, was durch die vorigen Verarbeitungsschritte produziert wurde.

Die ersten physikalischen Daten werden daraufhin als Datensatz z.B. erfolgreicher Plausibilisierung in Schritt 318 dem Kaltwalzwerk durch einen Sendevorgang zur Verfügung gestellt und vom Kaltwalzwerk in Schritt 320 ausgewertet. Im optionalen Schritt 322 kann das Kaltwalzwerk spezifisch für die empfangenen ersten physikalischen Daten und dem zugehörigen Fertigmaterial ein gewünschtes Metallwerkstück anhand von Fertigungsspezifikationen auswerten, welches in optimaler Weise, zum Beispiel in energieeffizienter oder zeiteffizienter oder materialeffizienter Weise oder einer Kombination derselben aus dem Fertigmaterial hergestellt werden kann. Möglich ist auch, dass optional das Kaltwalzwerk in Schritt 324 zweite physikalische Daten des empfangenen Fertigmaterials bestimmt, um im Rahmen einer Plausibilisierung in Schritt 326 (durchgeführt durch Kaltwalzwerk oder Warmwalzwerk) festzustellen, ob die ersten physikalischen Daten auch zu den zweiten physikalischen Daten passen oder nicht. Ist alles in bestimmten Toleranzen plausibel, kann schließlich in Schritt 328 das Kaltwalzwerk die Bearbeitung des Fertigmaterials zum gewünschten Metallwerkstück hin vornehmen.

Anstatt also ausschließlich diskrete Prozesswerte je Coil (zum Beispiel eine Durchschnittsdicke eines Coils) bezüglich einem Coil zur Verfügung zu stellen wird nun vorgeschlagen, kontinuierliche Werte (zum Beispiel eine Banddicke eines Coils im Rahmen von 1-Meter-Segmenten) über die gesamte Bandlänge zusammen mit dem Coil zur Verfügung zu stellen. Der Prozess der Coildatenaufbereitung, Plausibilisierung und der Transferierung zum Kaltwalzwerk bietet einen Mehrwert, zum Beispiel anhand der so bereitgestellten physikalischen Daten, um die Produktionsanlagen der Warm- und Kaltwalzwerke noch zielführender anzusteuern, die Produktionsleistung zu erhöhen und die Produktqualität weiter zu steigern. Die physikalischen Daten können beispielsweise als direkte Eingangssignale in die Steueralgorithmen der Fertigungsanlage des Kaltwalzwerkes einfließen.

Durch das digitale Abbild eines Coils sind ebenso Effekte im dispositiven Bereich der kundenseitigen Produktionsplanung und Steuerung gegeben. Zum Beispiel kann das Kaltwalzwerk anhand des Dickenschriebes eines Coils vorab erkennen, ob dieses "Vormaterial" zum Verwendungszweck seines Kunden passt oder nicht.

Die gezielte Datenrückführung in Form der zweiten physikalischen Daten in z.B. das Qualitätsmanagementsystem des Warmwalzwerkes ermöglicht eine Plausibilisierung und Verbesserung der dortigen Messsysteme und im Rahmen einer datengetriebenen Rückkopplung eine Optimierung der Produktqualität im Warmwalzwerk.

Vorzugsweise werden sämtliche in den Fertigungsaggregaten 204 vorgenommenen Fertigungsschritte wie Walzen, Beizen, Glühen usw. kontinuierlich als dritte physikalischen Daten gespeichert und programmtechnisch auf die Endabmessungen des Fertigmaterials 222 skaliert (zum Beispiel Stauchen, Strecken). Berücksichtigt werden hierbei auch Bandkürzungen und Richtungsänderungen des Bandlaufes in jedem Fertigungsschritt, zum Beispiel entnommen dem ERP-System, das die Vorgänge an den einzelnen Aggregaten 204 steuert, indem zum Beispiel die Messwerte vom Bandanfang und Bandende gespiegelt werden.

Aus den kontinuierlichen Ursprungsdaten werden die Coildaten je laufendem Bandmeter analysiert und als beispielsweise Mittelwert, Minimalwert und Maximalwert gespeichert. Ebenfalls können die Anzahl der Messwerte sowie die Standardabweichungen je Segment ermittelt und gespeichert werden. Die insbesondere zentral verfügbaren Daten können anschließend automatisch durch Plausibilitätsprüfungen (vergleiche Modul 240, welches auch bezüglich der ersten physikalischen Daten 228 und einem entsprechenden Versandgewicht arbeiten kann) zum Beispiel durch die Umrechnung des Versandgewichts zur Messdatenlänge in Metern auf Integrität hin geprüft. Durch die Rückführung der zweiten physikalischen Daten, zum Beispiel bei der Coileingangsmessung beim Einlauf in Kaltwalzaggregate, können die Messsysteme im Warmwalzwerk plausibilisiert und dadurch die Produktqualität optimiert werden.

Seitens des Kaltwalzwerkes ist dieses in der Lage, die übertragenen ersten physikalischen Daten frühzeitig vor dem Einsatz in den Produktionsanlagen einzusehen und zu analysieren. Entsprechend dispositive Aktionen bezüglich der Zuordnung eines Vormaterialcoils (als von Fertigmaterial) zu entsprechenden Fertigungsspezifikationen für entsprechende Fertigungsaufträge, zum Beispiel anhand des Verwendungszwecks seiner Kunden, sind ebenfalls möglich. Ebenso kann das Kaltwalzwerk aufgrund der Ist-Werte des Vormaterials die Belegung der Aggregate anpassen und die Fertigungsschritte durch intelligente Aggregateregelungen bereits vor dem Bandeinlauf einstellen. Beispielsweise kann das Kaltwalzwerk an den herausfordernden Bandabschnitten wie Walzgeschwindigkeit frühzeitiger und zielführender anpassen und auf die übrigen Bandabschnitten mit Maximalgeschwindigkeit fahren. Diese proaktive Optimierung der Bandgeschwindigkeiten führt beim Kunden zu besseren Fertigungsqualitäten und zu einer Steigerung der Anlagenproduktivität. Die Beeinflussung der Bandgeschwindigkeiten wurde in Figur 2 über die Walzparameter 236 beschrieben.

In einem weiteren Beispiel ist es möglich, dass die gesammelten dritten physikalischen Daten 226 im Warmwalz- und Beizprozess pro Messgröße (zum Beispiel Breite, Dicke) auf Meter-Segmente verdichtet und als Mittelwert, Minimalwert und Maximalwert, Standardabweichungen, Mittelmesswerteanzahl gespeichert werden. Die real verfahrenen Fertigungsschritte wie beispielsweise Walzen, Beizen, Glühen usw. werden aus einem entsprechenden Steuersystem des Warmwalzwerks abgerufen und die Coildaten entsprechend skaliert. Anschließend erfolgt dann die besagte Plausibilisierung der Coillänge durch das Versandgewicht, sodass hierdurch die korrekte und an den Kunden zu übermittelnde Coillänge sichergestellt wird. Nach erfolgreicher Plausibilisierung werden die Daten zusammen mit dem Coil dem Verarbeitungswerk, z.B. dem Kaltwalzwerk zur Verfügung gestellt.

### Bezugszeichenliste

- 100: Warmwalzwerk
- 102: Modul
- 104: Prozessor
- 106: Schnittstelle
- 108: Speicher
- 110: Anweisungen
- 112: Datensatz
- 114: physikalische Daten
- 116: Coil
- 118: Segment
- 120: Längsrichtung
- 122: Modul
- 124: Prozessor
- 126: Schnittstelle
- 128: Speicher
- 130: Anweisungen
- 134: Metallwerkstück
- 200: Warmwalzwerk
- 202: Kaltwalzwerk
- 204: Aggregat
- 206: Brammenguss
- 216: Verpackungseinheit
- 218: Bramme
- 220: Zwischenprodukt
- 222: Fertigmaterial
- 224: Sensor
- 226: dritte physikalische Daten
- 228: erste physikalische Daten
- 230: Berechnungsmodul
- 232: Betriebsparameter
- 234: Auswertungsmodul
- 236: Walzparameter
- 238: Fertigungsspezifikationen
- 240: Plausibilisierungsmodul
- 244: Aggregat

## Patentansprüche

1. Verfahren zur Produktion eines gewünschten Metallwerkstücks (134), wobei das Verfahren umfasst:
- Herstellung eines länglichen Fertigmaterials (116; 222) durch Warmwalzen, wobei dem Fertigmaterial (116; 222) ein erster Datensatz (112) zugeordnet ist, wobei das Fertigmaterial (116; 222) in seiner Längsrichtung in eine Vielzahl von ersten Segmenten (118) logisch unterteilt ist, wobei der erste Datensatz für jedes der ersten Segmente (118) das Segment charakterisierende erste physikalische Daten (228) aufweist,
- Bearbeitung des Fertigmaterials (116; 222) durch einen Verarbeitungsprozess zum Erhalt des gewünschten Metallwerkstücks (134), wobei der Verarbeitungsprozess zumindest teilweise auf Basis jener ersten physikalischen Daten (228) gesteuert wird, welche die ersten Segmente (118) charakterisieren, welche dem Fertigmaterial (116; 222) logisch zugeordnet sind,
wobei ein Satz von Fertigungsspezifikationen (238) gegeben ist, wobei jede der Fertigungsspezifikationen (238) erste physikalische Daten (228) von durch den Verarbeitungsprozess herzustellenden Metallwerkstücken umfasst, wobei die Steuerung des Verarbeitungsprozesses umfasst:
- Auswertung durch Vergleich der in dem ersten Datensatz enthaltenen ersten physikalischen Daten (228) mit den in den Fertigungsspezifikationen (238) enthaltenen ersten physikalischen Daten, welche der herzustellenden Metallwerkstücke durch die Bearbeitung des Fertigmaterials (116; 222) durch den Verarbeitungsprozess herstellbar sind,
- Auswählen des gewünschten Metallwerkstücks (134) unter den herstellbaren Metallwerkstücken für die Bearbeitung durch den Verarbeitungsprozess,
**dadurch gekennzeichnet, dass**
- die Bearbeitung des Fertigmaterials (116; 222) eine Erfassung zweiter physikalischer Daten (208) jener ersten Segmente (118) umfasst, welche dem zu bearbeitenden Fertigmaterial (116; 222) logisch zugeordnet sind,
- die ersten physikalischen Daten (228) mit den zweiten physikalischen Daten (208) plausibilisiert werden,
- auf Basis der Plausibilisierung (240) eine Optimierung von Messsystemen (224) erfolgt, anhand welcher die ersten und/oder zweiten physikalischen Daten (208) erfasst wurden oder wobei auf Basis der Plausibilisierung (240) eine Bearbeitung von weiterem durch das Warmwalzen herzustellenden Fertigmaterial (116; 222) angepasst oder gestoppt wird.

2. Verfahren nach einem der vorigen Ansprüche, wobei die Auswertung eine Bestimmung der Teile des Fertigmaterials (116; 222) umfasst, aus welchen die herzustellenden Metallwerkstücke herstellbar sind, wobei die Bearbeitung des Fertigmaterials (116; 222) eine Bearbeitung des bezüglich des gewünschten Metallwerkstücks (134) bestimmten Teils des Fertigmaterials (116; 222) umfasst.

3. Verfahren nach einem der vorigen Ansprüche, wobei die Steuerung des Verarbeitungsprozesses eine zum Erhalt des gewünschten Metallwerkstücks (134) spezifische Festlegung von physikalischen Biegeparametern und/oder Stanzparametern und/oder Walzparametern (236) anhand des ersten Datensatzes umfasst.

4. Verfahren nach Anspruch 3, wobei die spezifische Festlegung der physikalischen Biegeparameter und/oder Stanzparameter und/oder Walzparameter (236) anhand der ersten physikalischen Daten (228) jener ersten Segmente (118) erfolgt, welche dem zu bearbeitenden Teil des Fertigmaterials (116; 222) logisch zugeordnet sind.

5. Verfahren nach Anspruch 3 oder 4, wobei die physikalischen Walzparameter (236) umfassen: Walzgeschwindigkeit und/oder Walzdicke und/oder Zwischenglühtemperatur und/oder Dressierparameter.

6. Verfahren nach einem der vorigen Ansprüche, ferner umfassend:
- Vergleich des realen Gewichts des Fertigmaterials (116; 222) mit einem theoretischen Gewicht, wobei das theoretische Gewicht aus den ersten physikalischen Daten (228) berechnet wird,
- Im Falle dessen das reale Gewicht von dem theoretischen Gewicht um mehr als einen vordefinierten Toleranzwert abweicht, Ausgabe eines Signals über eine Nutzerschnittstelle.

7. Verfahren nach einem der vorigen Ansprüche, wobei die Herstellung des Fertigmaterials (116; 222) durch Warmwalzen durch mehrere Verarbeitungsschritte durch nacheinander geschaltete Fertigungseinheiten (204) erfolgt, wobei aufgrund der Verarbeitung durch die Fertigungseinheiten (204) jeweils ein längliches Zwischenprodukt (220) resultiert, wobei aufgrund der Verarbeitung durch die letzte der Fertigungseinheiten (204) als Zwischenprodukt (220) das Fertigmaterial (116; 222) resultiert.

8. Verfahren nach Anspruch 7, wobei einem gegebenen Zwischenprodukt (220) der Zwischenprodukte (220) ein zweiter Datensatz zugeordnet ist, wobei das gegebene Zwischenprodukt (220) in seiner Längsrichtung in eine Vielzahl von zweiten Segmenten logisch unterteilt ist, wobei der zweite Datensatz für jedes der zweiten Segmente das Segment charakterisierende dritte physikalische Daten (226) aufweist, wobei die Verarbeitung des gegebenen Zwischenprodukts (220) zum Fertigmaterial (116; 222) die physikalischen Eigenschaften des Zwischenprodukts (220) in vorbekannter Weise beeinflusst, wobei die ersten physikalischen Daten (228) aus den dritten physikalischen Daten (226) berechnet werden und das Berechnen (230) die vorbekannte Beeinflussung berücksichtigt.

9. Verfahren nach Anspruch 8, wobei die vorbekannte Beeinflussung eine mechanische und/oder geometrische Beeinflussung umfasst.

10. Verfahren nach Anspruch 8 oder 9, wobei sich die Geometrie des Fertigmaterials (116; 222) von der Geometrie des gegebenen Zwischenprodukts (220) unterscheidet, wobei die vorbekannte Beeinflussung den Geometrieunterschied umfasst, wobei das Berechnen (230) der ersten physikalischen Daten (228) aus den dritten physikalischen Daten (226) eine aus dem Geometrieunterschied resultierende Zuordnung der zweiten Segmente zu den ersten Segmenten (118) berücksichtigt.

11. Verfahren nach Anspruch 10, wobei das Verfahren eine Plausibilisierung der ersten physikalischen Daten (228) mit den dritten physikalischen Daten (226) und dem Geometrieunterschied umfasst, wobei im Falle dessen eine Plausibilisierung nicht möglich ist ein Signal über eine Nutzerschnittstelle ausgegeben wird.

12. Verfahren nach einem der vorigen Ansprüche 7 - 11, wobei die Verarbeitung eines gegebenen Zwischenprodukts (220) der Zwischenprodukte (220) mit Betriebsparametern (232) der die Verarbeitung durchführenden Fertigungseinheit erfolgt, wobei aus der Verarbeitung des gegebenen Zwischenprodukts (220) eine den ersten Segmenten (118) zuordenbare Bearbeitung des Zwischenprodukts (220) mit den jeweiligen Betriebsparametern resultiert, wobei die ersten physikalischen Daten (228) spezifisch für die ersten Segmente (118) die bei der Verarbeitung verwendeten Betriebsparameter (232) umfasst.

13. Verfahren nach Anspruch 10, wobei die Betriebsparameter (232) umfassen:
- eine bei der Verarbeitung auf das jeweils verarbeitete Zwischenprodukt (220) einwirkende Kraft und/oder Temperatur und/oder
- eine Verarbeitungsgeschwindigkeit und/oder
- eine Balligkeit einer bei der Verarbeitung durch die Fertigungseinheit verwendete Walze.

14. Verfahren nach einem der vorigen Ansprüche, wobei die ersten (228), zweiten (208) und/oder dritten physikalischen Daten (226) bezogen auf ein gegebenes Segment zumindest eines der folgenden aufweisen: Absolutwert, Mittelwert, Minimum, Maximum, Standardabweichung;
und / oder
wobei die ersten (228), zweiten (208) und/oder dritten physikalischen Daten (226) bezogen auf ein gegebenes Segment zumindest eine der folgenden Eigenschaften des Segments beschreiben: Mechanische Eigenschaften, geometrische Eigenschaften.

15. System zur Produktion eines gewünschten Metallwerkstücks (134), wobei das System ausgebildet ist zur:
- Herstellung eines länglichen Fertigmaterials (116; 222) durch Warmwalzen, wobei dem Fertigmaterial (116; 222) ein erster Datensatz (112) zugeordnet ist, wobei das Fertigmaterial (116; 222) in seiner Längsrichtung in eine Vielzahl von ersten Segmenten (118) logisch unterteilt ist, wobei der erste Datensatz (112) für jedes der ersten Segmente (118) das Segment charakterisierende erste physikalische Daten (228) aufweist,
- Bearbeitung des Fertigmaterials (116; 222) durch einen Verarbeitungsprozess zum Erhalt des gewünschten Metallwerkstücks (134), wobei der Verarbeitungsprozess zumindest teilweise auf Basis jener ersten physikalischen Daten (228) gesteuert wird, welche die ersten Segmente (118) charakterisieren, welche dem Fertigmaterial (116; 222) logisch zugeordnet sind,
wobei ein Satz von Fertigungsspezifikationen (238) gegeben ist, wobei jede der Fertigungsspezifikationen (238) erste physikalische Daten (228) von durch den Verarbeitungsprozess herzustellenden Metallwerkstücken umfasst, wobei die Steuerung des Verarbeitungsprozesses umfasst:
- Auswertung durch Vergleich der in dem ersten Datensatz enthaltenen ersten physikalischen Daten (228) mit den in den Fertigungsspezifikationen (238) enthaltenen ersten physikalischen Daten, welche der herzustellenden Metallwerkstücke durch die Bearbeitung des Fertigmaterials (116; 222) durch den Verarbeitungsprozess herstellbar sind,
- Auswählen des gewünschten Metallwerkstücks (134) unter den herstellbaren Metallwerkstücken für die Bearbeitung durch den Verarbeitungsprozess,
**dadurch gekennzeichnet, dass**
- die Bearbeitung des Fertigmaterials (116; 222) eine Erfassung zweiter physikalischer Daten (208) jener ersten Segmente (118) umfasst, welche dem zu bearbeitenden Fertigmaterial (116; 222) logisch zugeordnet sind,
- die ersten physikalischen Daten (228) mit den zweiten physikalischen Daten (208) plausibilisiert werden,
- auf Basis der Plausibilisierung (240) eine Optimierung von Messsystemen (224) erfolgt, anhand welcher die ersten und/oder zweiten physikalischen Daten (208) erfasst wurden oder wobei auf Basis der Plausibilisierung (240) eine Bearbeitung von weiterem durch das Warmwalzen herzustellenden Fertigmaterial (116; 222) angepasst oder gestoppt wird.

16. System nach Anspruch 15, wobei die Auswertung eine Bestimmung der Teile des Fertigmaterials (116; 222) umfasst, aus welchen die herzustellenden Metallwerkstücke herstellbar sind, wobei die Bearbeitung des Fertigmaterials (116; 222) eine Bearbeitung des bezüglich des gewünschten Metallwerkstücks (134) bestimmten Teils des Fertigmaterials (116; 222) umfasst.

17. Verfahren zur Steuerung einer Produktionsanlage (132) eines Verarbeitungswerkes zur Produktion eines gewünschten Metallwerkstücks (134) aus einem Fertigmaterial, wobei das Verfahren durch die Produktionsanlage (132) des Verarbeitungswerkes umfasst:
- Empfangen eines ersten Datensatzes (112), wobei dem Fertigmaterial (116; 222) der erste Datensatz zugeordnet ist, wobei das Fertigmaterial (116; 222) in seiner Längsrichtung in eine Vielzahl von ersten Segmenten (118) logisch unterteilt ist, wobei der erste Datensatz für jedes der ersten Segmente (118) das Segment charakterisierende erste physikalische Daten (228) aufweist,
- Bearbeiten des Fertigmaterials (116; 222) durch einen Verarbeitungsprozess zum Erhalt des gewünschten Metallwerkstücks (134), wobei der Verarbeitungsprozess zumindest teilweise auf Basis jener ersten physikalischen Daten (228) gesteuert wird, welche die ersten Segmente (118) charakterisieren, welche dem Fertigmaterial (116; 222) logisch zugeordnet sind,
wobei ein Satz von Fertigungsspezifikationen (238) gegeben ist, wobei jede der Fertigungsspezifikationen (238) erste physikalische Daten (228) von durch den Verarbeitungsprozess herzustellenden Metallwerkstücken umfasst, wobei die Steuerung des Verarbeitungsprozesses umfasst:
- Auswertung durch Vergleich der in dem ersten Datensatz enthaltenen ersten physikalischen Daten (228) mit den in den Fertigungsspezifikationen (238) enthaltenen ersten physikalischen Daten, welche der herzustellenden Metallwerkstücke durch die Bearbeitung des Fertigmaterials (116; 222) durch den Verarbeitungsprozess herstellbar sind,
- Auswählen des gewünschten Metallwerkstücks (134) unter den herstellbaren Metallwerkstücken für die Bearbeitung durch den Verarbeitungsprozess,
**dadurch gekennzeichnet, dass**
- die Bearbeitung des Fertigmaterials (116; 222) eine Erfassung zweiter physikalischer Daten (208) jener ersten Segmente (118) umfasst, welche dem zu bearbeitenden Fertigmaterial (116; 222) logisch zugeordnet sind,
- die ersten physikalischen Daten (228) mit den zweiten physikalischen Daten (208) plausibilisiert werden,
- auf Basis der Plausibilisierung (240) eine Optimierung von Messsystemen (224) erfolgt, anhand welcher die ersten und/oder zweiten physikalischen Daten (208) erfasst wurden oder wobei auf Basis der Plausibilisierung (240) eine Bearbeitung von weiterem durch das Warmwalzen herzustellenden Fertigmaterial (116; 222) angepasst oder gestoppt wird.

18. Verfahren nach Anspruch 17, wobei die Auswertung eine Bestimmung der Teile des Fertigmaterials (116; 222) umfasst, aus welchen die herzustellenden Metallwerkstücke herstellbar sind, wobei die Bearbeitung des Fertigmaterials (116; 222) eine Bearbeitung des bezüglich des gewünschten Metallwerkstücks (134) bestimmten Teils des Fertigmaterials (116; 222) umfasst.

19. Vorrichtung (122) zur Steuerung einer Produktionsanlage (132) eines Verarbeitungswerkes , wobei die Vorrichtung einen Prozessor (124) und einen Speicher (128) mit Programminstruktionen (130) aufweist, wobei die Ausführung der Programminstruktionen (130) die die Produktionsanlage (132) des Verarbeitungswerkes steuert zum:
- Empfangen eines ersten Datensatzes (112), wobei dem Fertigmaterial (116; 222) der erste Datensatz zugeordnet ist, wobei das Fertigmaterial (116; 222) in seiner Längsrichtung in eine Vielzahl von ersten Segmenten (118) logisch unterteilt ist, wobei der erste Datensatz für jedes der ersten Segmente (118) das Segment charakterisierende erste physikalische Daten (228) aufweist,
- Bearbeiten des Fertigmaterials (116; 222) durch einen Verarbeitungsprozess zum Erhalt des gewünschten Metallwerkstücks (134), wobei der Verarbeitungsprozess zumindest teilweise auf Basis jener ersten physikalischen Daten (228) gesteuert wird, welche die ersten Segmente (118) charakterisieren, welche dem Fertigmaterial (116; 222) logisch zugeordnet sind,
wobei ein Satz von Fertigungsspezifikationen (238) gegeben ist, wobei jede der Fertigungsspezifikationen (238) erste physikalische Daten (228) von durch den Verarbeitungsprozess herzustellenden Metallwerkstücken umfasst, wobei die Steuerung des Verarbeitungsprozesses umfasst:
- Auswertung durch Vergleich der in dem ersten Datensatz enthaltenen ersten physikalischen Daten (228) mit den in den Fertigungsspezifikationen (238) enthaltenen ersten physikalischen Daten, welche der herzustellenden Metallwerkstücke durch die Bearbeitung des Fertigmaterials (116; 222) durch den Verarbeitungsprozess herstellbar sind,
- Auswählen des gewünschten Metallwerkstücks (134) unter den herstellbaren Metallwerkstücken für die Bearbeitung durch den Verarbeitungsprozess,
**dadurch gekennzeichnet, dass**
- die Bearbeitung des Fertigmaterials (116; 222) eine Erfassung zweiter physikalischer Daten (208) jener ersten Segmente (118) umfasst, welche dem zu bearbeitenden Fertigmaterial (116; 222) logisch zugeordnet sind,
- die ersten physikalischen Daten (228) mit den zweiten physikalischen Daten (208) plausibilisiert werden,
- auf Basis der Plausibilisierung (240) eine Optimierung von Messsystemen (224) erfolgt, anhand welcher die ersten und/oder zweiten physikalischen Daten (208) erfasst wurden oder wobei auf Basis der Plausibilisierung (240) eine Bearbeitung von weiterem durch das Warmwalzen herzustellenden Fertigmaterial (116; 222) angepasst oder gestoppt wird.

20. Vorrichtung nach Anspruch 19, wobei die Auswertung eine Bestimmung der Teile des Fertigmaterials (116; 222) umfasst, aus welchen die herzustellenden Metallwerkstücke herstellbar sind, wobei die Bearbeitung des Fertigmaterials (116; 222) eine Bearbeitung des bezüglich des gewünschten Metallwerkstücks (134) bestimmten Teils des Fertigmaterials (116; 222) umfasst.

21. Computerprogrammprodukt mit von einem Prozessor ausführbaren Instruktionen zur Steuerung des Verfahrens nach einem der vorigen Ansprüche.

## Claims

1. A method for producing a desired metal workpiece (134), wherein the method comprises:
- producing an elongate finished material (116; 222) by hot rolling, wherein a first data record (112) is assigned to the finished material (116; 222), wherein the finished material (116; 222) is logically divided in its longitudinal direction into a plurality of first segments (118), wherein the first data record, for each of the first segments (118), includes first physical data (228) characterizing the segment; and
- working the finished material (116; 222) using a processing process to obtain the desired metal workpiece (134), wherein the processing process is controlled at least partially on the basis of the first physical data (228) characterizing the first segments (118) that are logically assigned to the finished material (116; 222),
wherein a set of manufacturing specifications (238) is provided, wherein each of the manufacturing specifications (238) comprises first physical data (228) of metal workpieces to be produced by the processing process, wherein the control of the processing process comprises:
- evaluating, by comparing the first physical data (228) included in the first data record with the first physical data included in the manufacturing specifications (238), which of the metal workpieces to be produced are producible by the working of the finished material (116; 222) using the processing process; and
- selecting the desired metal workpiece (134) among the producible metal workpieces for the working using the processing process,
**characterised in that**
- the working of the finished material (116; 222) comprises collecting second physical data (208) of those first segments (118) which are logically assigned to the finished material (116; 222) to be worked, and
- the first physical data (228) are checked for plausibility using the second physical data (208),
- on the basis of the plausibility check (240), measuring systems (224) are optimized, by which the first and/or second physical data (208) were collected, or wherein on the basis of the plausibility check (240) a working of further finished material (116; 222) to be produced by hot rolling is adapted or halted.

2. The method according to the preceding claim, wherein the evaluation comprises determining the parts of the finished material (116; 222) from which the metal workpieces to be produced are producible, wherein the working of the finished material (116; 222) comprises a working of the part of the finished material (116; 222) determined with respect to the desired metal workpiece (134) .

3. The method according to any one of the preceding claims, wherein the control of the processing process comprises specifically establishing physical bending parameters and/or stamping parameters and/or rolling parameters (236) based on the first data record so as to obtain the desired metal workpiece (134).

4. The method according to claim 3, wherein the specific establishment of the physical bending parameters and stamping parameters and/or rolling parameters (236) is carried out based on the first physical data (228) of those first segments (118) which are logically assigned to the part of the finished material (116; 222) to be worked.

5. The method according to claim 3 or 4, wherein the physical rolling parameters (236) comprise: rolling speed and/or rolling thickness and/or intermediate annealing temperature and/or temper rolling parameters.

6. The method according to any one of the preceding claims, further comprising:
- comparing the real weight of the finished material (116; 222) with a theoretical weight, wherein the theoretical weight is calculated from the first physical data (228),
- in the event that the real weight deviates from the theoretical weight by more than a predefined tolerance value, outputting a signal via a user interface.

7. The method according to any one of the preceding claims, wherein the finished material (116; 222) is produced by hot rolling by way of a plurality of processing steps using consecutive manufacturing units (204), wherein processing by the manufacturing units (204) in each case results in an elongate intermediate product (220), wherein processing by the last of the manufacturing units (204) results in the finished material (116; 222) as an intermediate product (220).

8. The method according to claim 7, wherein a second data record is assigned to a given intermediate product (220) of the intermediate products (220), wherein the given intermediate product (220) is logically divided in its longitudinal direction into a plurality of second segments, wherein the second data record for each of the second segments includes third physical data (226) characterizing the segment, wherein the processing of the given intermediate product (220) to yield the finished material (116; 222) influences the physical properties of the intermediate product (220) in a previously known manner, wherein the first physical data (228) are calculated from the third physical data (226), and the calculation (230) takes the previously known influence into consideration.

9. The method according to claim 8, wherein the previously known influence comprises a mechanical and/or geometric influence.

10. The method according to claim 8 or 9, wherein the geometry of the finished material (116; 222) differs from the geometry of the given intermediate product (220), wherein the previously known influence comprises the difference in geometry, wherein the calculation (230) of the first physical data (228) from the third physical data (226) takes into consideration an assignment of the second segments, which results from the difference in geometry, to the first segments (118).

11. The method according to claim 10, wherein the method comprises conducting a plausibility check of the first physical data (228) using the third physical data (226) and the difference in geometry, wherein, in the event that a plausibility check is not possible, a signal is output via a user interface.

12. The method according to any one of preceding claims 7-11, wherein a given intermediate product (220) of the intermediate products (220) is processed using operating parameters (232) of the manufacturing unit carrying out the processing, wherein the processing of the given intermediate product (220) results in a working of the intermediate product (220), in a manner that is assignable to the first segments (118), using the respective operating parameters, wherein the first physical data (228) comprise the operating parameters (232) used during the processing specifically for the first segments (118).

13. The method according to claim 10, wherein the operating parameters (232) comprise:
- a force, acting on the respective processed intermediate product (220) during the processing, and/or temperature and/or
- a processing speed and/or
- a convexity of a roll used during the processing by the manufacturing unit.

14. The method according to any one of the preceding claims, wherein the first (228), second (208) and third physical data (226), based on a given segment, comprise at least one of the following: an absolute value, a mean value, a minimum, a maximum, a standard deviation;
and/or
wherein the first (228), second (208) and/or third physical data (226), based on a given segment, describe at least one of the following properties of the segment: mechanical properties, geometric properties.

15. A system for producing a desired metal workpiece (134), wherein the system is configured to:
- produce an elongate finished material (116; 222) by hot rolling, wherein a first data record (112) is assigned to the finished material (116; 222), wherein the finished material (116; 222) is logically divided in its longitudinal direction into a plurality of first segments (118), wherein the first data record (112), for each of the first segments (118), includes first physical data (228) characterizing the segment; and
- working the finished material (116; 222) using a processing process to obtain the desired metal workpiece (134), wherein the processing process is controlled at least partially on the basis of the first physical data (228) characterizing the first segments (118) that are logically assigned to the finished material (116; 222),
wherein a set of manufacturing specifications (238) is provided, wherein each of the manufacturing specifications (238) comprises first physical data (228) of metal workpieces to be produced by the processing process, wherein the control of the processing process comprises:
- evaluating, by comparing the first physical data (228) included in the first data record with the first physical data included in the manufacturing specifications (238), which of the metal workpieces to be produced are producible by the working of the finished material (116; 222) using the processing process; and
- selecting the desired metal workpiece (134) among the producible metal workpieces for the working using the processing process,
**characterised in that**
- the working of the finished material (116; 222) comprises collecting second physical data (208) of those first segments (118) which are logically assigned to the finished material (116; 222) to be worked, and
- the first physical data (228) are checked for plausibility using the second physical data (208),
- on the basis of the plausibility check (240), measuring systems (224) are optimized, by which the first and/or second physical data (208) were collected, or wherein on the basis of the plausibility check (240) a working of further finished material (116; 222) to be produced by hot rolling is adapted or halted.

16. The system according to claim 15, wherein the evaluation comprises determining the parts of the finished material (116; 222) from which the metal workpieces to be produced are producible, wherein the working of the finished material (116; 222) comprises a working of the part of the finished material (116; 222) determined with respect to the desired metal workpiece (134).

17. A method for controlling a production system (132) of a processing plant for producing a desired metal workpiece (134) from a finished material, wherein the method by the production system (132) of the processing plant comprises:
- receiving a first data record (112), wherein the first data record is assigned to the finished material (116; 222), wherein the finished material (116; 222) is logically divided in its longitudinal direction into a plurality of first segments (118), wherein the first data record, for each of the first segments (118), includes first physical data (228) characterizing the segment, and
- working the finished material (116; 222) using a processing process to obtain the desired metal workpiece (134), wherein the processing process is controlled at least partially on the basis of the first physical data (228) characterizing the first segments (118) that are logically assigned to the finished material (116; 222),
wherein a set of manufacturing specifications (238) is provided, wherein each of the manufacturing specifications (238) comprises first physical data (228) of metal workpieces to be produced by the processing process, wherein the control of the processing process comprises:
- evaluating, by comparing the first physical data (228) included in the first data record with the first physical data included in the manufacturing specifications (238), which of the metal workpieces to be produced are producible by the working of the finished material (116; 222) using the processing process; and
- selecting the desired metal workpiece (134) among the producible metal workpieces for the working using the processing process,
**characterised in that**
- the working of the finished material (116; 222) comprises collecting second physical data (208) of those first segments (118) which are logically assigned to the finished material (116; 222) to be worked, and
- the first physical data (228) are checked for plausibility using the second physical data (208),
- on the basis of the plausibility check (240), measuring systems (224) are optimized, by which the first and/or second physical data (208) were collected, or wherein on the basis of the plausibility check (240) a working of further finished material (116; 222) to be produced by hot rolling is adapted or halted.

18. The method according to claim 17, wherein the evaluation comprises determining the parts of the finished material (116; 222) from which the metal workpieces to be produced are producible, wherein the working of the finished material (116; 222) comprises a working of the part of the finished material (116; 222) determined with respect to the desired metal workpiece (134).

19. A device (122) for controlling a production system (132) of a processing plant, wherein the device comprises a processor (124) and a memory (128) including program instructions, wherein the execution of the program instructions (130) controls the production system (132) of the processing plant so as to:
- receive a first data record (112), wherein the first data record is assigned to the finished material (116; 222), wherein the finished material (116; 222) is logically divided in its longitudinal direction into a plurality of first segments (118), wherein the first data record, for each of the first segments (118), includes first physical data (228) characterizing the segment; and
- work the finished material (116; 222) using a processing process to obtain the desired metal workpiece (134), wherein the processing process is at least partially controlled on the basis of the first physical data (228) characterizing the first segments (118) that are logically assigned to the finished material (116; 222),
wherein a set of manufacturing specifications (238) is provided, wherein each of the manufacturing specifications (238) comprises first physical data (228) of metal workpieces to be produced by the processing process, wherein the control of the processing process comprises:
- evaluating, by comparing the first physical data (228) included in the first data record with the first physical data included in the manufacturing specifications (238), which of the metal workpieces to be produced are producible by the working of the finished material (116; 222) using the processing process; and
- selecting the desired metal workpiece (134) among the producible metal workpieces for the working using the processing process,
**characterised in that**
- the working of the finished material (116; 222) comprises collecting second physical data (208) of those first segments (118) which are logically assigned to the finished material (116; 222) to be worked, and
- the first physical data (228) are checked for plausibility using the second physical data (208),
- on the basis of the plausibility check (240), measuring systems (224) are optimized, by which the first and/or second physical data (208) were collected, or wherein on the basis of the plausibility check (240) a working of further finished material (116; 222) to be produced by hot rolling is adapted or halted.

20. The device according to claim 19, wherein the evaluation comprises determining the parts of the finished material (116; 222) from which the metal workpieces to be produced are producible, wherein the working of the finished material (116; 222) comprises a working of the part of the finished material (116; 222) determined with respect to the desired metal workpiece (134).

21. A computer program product comprising instructions, executable by a processor, for controlling the method according to any one of the preceding claims.

## Revendications

1. Procédé de production d'une pièce à travailler métallique (134) souhaitée, dans lequel le procédé comprend les étapes consistant à :
- produire un matériau fini allongé (116 ; 222) par laminage à chaud, dans lequel un premier dossier de données (112) est attribué au matériau fini (116 ; 222), dans lequel le matériau fini (116 ; 222) est divisé logiquement dans sa direction longitudinale en une pluralité de premiers segments (118), dans lequel le premier dossier de données, pour chacun des premiers segments (118), inclut des premières données physiques (228) caractérisant le segment ; et
- travailler le matériau fini (116 ; 222) en utilisant un processus de transformation pour obtenir la pièce à travailler métallique (134) souhaitée, dans lequel le processus de transformation est commandé au moins partiellement sur la base des premières données physiques (228) caractérisant les premiers segments (118) qui sont logiquement attribués au matériau fini (116 ; 222),
dans lequel un ensemble de spécifications de fabrication (238) est fourni, dans lequel chacune des spécifications de fabrication (238) comprend des premières données physiques (228) de pièces à travailler métalliques à produire par le processus de transformation, dans lequel la commande du processus de transformation comprend les étapes consistant à :
- évaluer, en comparant les premières données physiques (228) incluses dans le premier dossier de données avec les premières données physiques incluses dans les spécifications de fabrication (238), lesquelles pièces à travailler métalliques à produire pouvant être produites par le travail du matériau fini (116 ; 222) en utilisant le processus de transformation ; et
- sélectionner la pièce à travailler métallique (134) souhaitée parmi les pièces à travailler métalliques pouvant être produites pour le travail en utilisant le processus de transformation,
**caractérisé en ce que**
- le travail du matériau fini (116 ; 222) comprend une étape consistant à collecter des deuxièmes données physiques (208) de ces premiers segments (118) qui sont logiquement attribuées au matériau fini (116 ; 222) à travailler, et
- les premières données physiques (228) sont vérifiées du point de vue de leur plausibilité en utilisant les deuxièmes données physiques (208),
- sur la base de la vérification de plausibilité (240), les systèmes de mesure (224), par lesquels les premières et/ou deuxièmes données physiques (208) ont été collectées, sont optimisés, ou dans lequel sur la base de la vérification de plausibilité (240), un travail de matériau fini (116 ; 222) supplémentaire à produire par laminage à chaud est adapté ou interrompu.

2. Procédé selon la revendication précédente, dans lequel l'évaluation comprend une étape consistant à déterminer les parties du matériau fini (116 ; 222) à partir desquelles les pièces à travailler métalliques à produire peuvent être produites, dans lequel le travail du matériau fini (116 ; 222) comprend un travail de la partie du matériau fini (116 ; 222) déterminé par rapport à la pièce à travailler métallique (134) souhaitée.

3. Procédé selon l'une quelconque des revendications précédentes, dans lequel la commande du processus de transformation comprend une étape consistant à établir spécifiquement des paramètres de pliage physique et/ou des paramètres d'estampage et/ou des paramètres de laminage (236) en se basant sur le premier dossier de données de manière à obtenir la pièce à travailler métallique (134) souhaitée.

4. Procédé selon la revendication 3, dans lequel l'étape consistant à établir spécifiquement les paramètres de pliage physique et les paramètres d'estampage et/ou les paramètres de laminage (236) est mise en oeuvre en se basant sur les premières données physiques (228) des premiers segments (118) qui sont attribués logiquement à la partie du matériau fini (116 ; 222) à travailler.

5. Procédé selon la revendication 3 ou 4, dans lequel les paramètres de laminage physique (236) comprennent : les paramètres de vitesse de laminage et/ou d'épaisseur de laminage et/ou de température de recuit intermédiaire et/ou d'écrouissage.

6. Procédé selon l'une quelconque des revendications précédentes, comprenant en outre les étapes consistant à :
- comparer le poids réel du matériau fini (116 ; 222) à un poids théorique, dans lequel le poids théorique est calculé à partir des premières données physiques (228),
- dans le cas où le poids réel dévie du poids théorique de plus d'une valeur de tolérance prédéfinie, émettre un signal par l'intermédiaire d'une interface utilisateur.

7. Procédé selon l'une quelconque des revendications précédentes, dans lequel le matériau fini (116 ; 222) est produit par laminage à chaud par le biais d'une pluralité d'étapes de transformation en utilisant des unités de fabrication (204) consécutives, dans lequel la transformation par les unités de fabrication (204) résulte dans chaque cas en un produit intermédiaire allongé (220), dans lequel la transformation par la dernière des unités de fabrication (204) résulte en le matériau fini (116 ; 222) en tant que produit intermédiaire (220) .

8. Procédé selon la revendication 7, dans lequel un second dossier de données est attribué à un produit intermédiaire (220) donné parmi les produits intermédiaires (220), dans lequel le produit intermédiaire (220) donné est logiquement divisé dans sa direction longitudinale en une pluralité de seconds segments, dans lequel le second dossier de données pour chacun des seconds segments inclut des troisièmes données physiques (226) caractérisant le segment, dans lequel la transformation du produit intermédiaire (220) donné pour obtenir le matériau fini (116 ; 222) influence les propriétés physiques du produit intermédiaire (220) d'une manière précédemment connue, dans lequel les premières données physiques (228) sont calculées à partir des troisièmes données physiques (226), et le calcul (230) prend en compte l'influence précédemment connue.

9. Procédé selon la revendication 8, dans lequel l'influence précédemment connue comprend une influence mécanique et/ou géométrique.

10. Procédé selon la revendication 8 ou 9, dans lequel la géométrie du matériau fini (116 ; 222) diffère de la géométrie du produit intermédiaire (220) donné, dans lequel l'influence précédemment connue comprend la différence de géométrie, dans lequel le calcul (230) des premières données physiques (228) à partir des troisièmes données physiques (226) prend en compte une attribution des seconds segments, qui résulte de la différence de géométrie, aux premiers segments (118).

11. Procédé selon la revendication 10, dans lequel le procédé comprend une étape consistant à mener une vérification de plausibilité des premières données physiques (228) en utilisant les troisièmes données physiques (226) et la différence de géométrie, dans lequel, dans le cas où une vérification de plausibilité n'est pas possible, un signal est émis par l'intermédiaire d'une interface utilisateur.

12. Procédé selon l'une quelconque des revendications 7 à 11 précédentes, dans lequel un produit intermédiaire (220) donné parmi les produits intermédiaires (220) est transformé en utilisant les paramètres de fonctionnement (232) de l'unité de fabrication mettant en oeuvre la transformation, dans lequel la transformation du produit intermédiaire (220) donné résulte en un travail du produit intermédiaire (220), d'une manière qui peut être attribuée aux premiers segments (118), en utilisant les paramètres de fonctionnement respectifs, dans lequel les premières données physiques (228) comprennent les paramètres de fonctionnement (232) utilisés pendant la transformation spécifiquement pour les premiers segments (118).

13. Procédé selon la revendication 10, dans lequel les paramètres de fonctionnement (232) comprennent :
- une force, agissant sur le produit intermédiaire (220) transformé respectif pendant la transformation, et/ou la température et/ou
- une vitesse de transformation et/ou
- une convexité d'un rouleau utilisé pendant la transformation par l'unité de fabrication.

14. Procédé selon l'une quelconque des revendications précédentes, dans lequel les premières (228), deuxièmes (208) et troisièmes données physiques (226), en se basant sur un segment donné, comprennent au moins l'un des suivants : une valeur absolue, une valeur moyenne, un minimum, un maximum, un écart-type ;
et/ou
dans lequel les premières (228), deuxièmes (208) et/ou troisièmes données physiques (226), en se basant sur un segment donné, décrivent au moins l'une des propriétés suivantes du segment : propriétés mécaniques, propriétés géométriques.

15. Système de production d'une pièce à travailler métallique (134) souhaitée, dans lequel le système est conçu pour :
- produire un matériau fini allongé (116 ; 222) par laminage à chaud, dans lequel un premier dossier de données (112) est attribué au matériau fini (116 ; 222), dans lequel le matériau fini (116 ; 222) est divisé logiquement dans sa direction longitudinale en une pluralité de premiers segments (118), dans lequel le premier dossier de données (112), pour chacun des premiers segments (118), inclut des premières données physiques (228) caractérisant le segment ; et
- travailler le matériau fini (116 ; 222) en utilisant un processus de transformation pour obtenir la pièce à travailler métallique (134) souhaitée, dans lequel le processus de transformation est commandé au moins partiellement sur la base des premières données physiques (228) caractérisant les premiers segments (118) qui sont logiquement attribués au matériau fini (116 ; 222),
dans lequel un ensemble de spécifications de fabrication (238) est fourni, dans lequel chacune des spécifications de fabrication (238) comprend des premières données physiques (228) de pièces à travailler métalliques à produire par le processus de transformation, dans lequel la commande du processus de transformation comprend les étapes consistant à :
- évaluer, en comparant les premières données physiques (228) incluses dans le premier dossier de données avec les premières données physiques incluses dans les spécifications de fabrication (238), lesquelles pièces à travailler métalliques à produire pouvant être produites par le travail du matériau fini (116 ; 222) en utilisant le processus de transformation ; et
- sélectionner la pièce à travailler métallique (134) souhaitée parmi les pièces à travailler métalliques pouvant être produites pour le travail en utilisant le processus de transformation,
**caractérisé en ce que**
- le travail du matériau fini (116 ; 222) comprend une étape consistant à collecter des deuxièmes données physiques (208) de ces premiers segments (118) qui sont logiquement attribuées au matériau fini (116 ; 222) à travailler, et
- les premières données physiques (228) sont vérifiées du point de vue de leur plausibilité en utilisant les deuxièmes données physiques (208),
- sur la base de la vérification de plausibilité (240), les systèmes de mesure (224), par lesquels les premières et/ou deuxièmes données physiques (208) ont été collectées, sont optimisés, ou dans lequel sur la base de la vérification de plausibilité (240), un travail de matériau fini (116 ; 222) supplémentaire à produire par laminage à chaud est adapté ou interrompu.

16. Système selon la revendication 15, dans lequel l'évaluation comprend une étape consistant à déterminer les parties du matériau fini (116 ; 222) à partir desquelles les pièces à travailler métalliques à produire peuvent être produites, dans lequel le travail du matériau fini (116 ; 222) comprend un travail de la partie du matériau fini (116 ; 222) déterminé par rapport à la pièce à travailler métallique (134) souhaitée.

17. Procédé de commande d'un système de production (132) d'une usine de transformation pour produire une pièce à travailler métallique (134) souhaitée à partir d'un matériau fini, dans lequel le procédé par le système de production (132) de l'usine de transformation comprend les étapes consistant à :
- recevoir un premier dossier de données (112), dans lequel le premier dossier de données est attribué au matériau fini (116 ; 222), dans lequel le matériau fini (116 ; 222) est divisé logiquement dans sa direction longitudinale en une pluralité de premiers segments (118), dans lequel le premier dossier de données, pour chacun des premiers segments (118), inclut des premières données physiques (228) caractérisant le segment, et
- travailler le matériau fini (116 ; 222) en utilisant un processus de transformation pour obtenir la pièce à travailler métallique (134) souhaitée, dans lequel le processus de transformation est commandé au moins partiellement sur la base des premières données physiques (228) caractérisant les premiers segments (118) qui sont logiquement attribués au matériau fini (116 ; 222),
dans lequel un ensemble de spécifications de fabrication (238) est fourni, dans lequel chacune des spécifications de fabrication (238) comprend des premières données physiques (228) de pièces à travailler métalliques à produire par le processus de transformation, dans lequel la commande du processus de transformation comprend les étapes consistant à :
- évaluer, en comparant les premières données physiques (228) incluses dans le premier dossier de données avec les premières données physiques incluses dans les spécifications de fabrication (238), lesquelles pièces à travailler métalliques à produire pouvant être produites par le travail du matériau fini (116 ; 222) en utilisant le processus de transformation ; et
- sélectionner la pièce à travailler métallique (134) souhaitée parmi les pièces à travailler métalliques pouvant être produites pour le travail en utilisant le processus de transformation,
**caractérisé en ce que**
- le travail du matériau fini (116 ; 222) comprend une étape consistant à collecter des deuxièmes données physiques (208) de ces premiers segments (118) qui sont logiquement attribuées au matériau fini (116 ; 222) à travailler, et
- les premières données physiques (228) sont vérifiées du point de vue de leur plausibilité en utilisant les deuxièmes données physiques (208),
- sur la base de la vérification de plausibilité (240), les systèmes de mesure (224), par lesquels les premières et/ou deuxièmes données physiques (208) ont été collectées, sont optimisés, ou dans lequel sur la base de la vérification de plausibilité (240), un travail de matériau fini (116 ; 222) supplémentaire à produire par laminage à chaud est adapté ou interrompu.

18. Procédé selon la revendication 17, dans lequel l'évaluation comprend une étape consistant à déterminer les parties du matériau fini (116 ; 222) à partir desquelles les pièces à travailler métalliques à produire peuvent être produites, dans lequel le travail du matériau fini (116 ; 222) comprend un travail de la partie du matériau fini (116 ; 222) déterminé par rapport à la pièce à travailler métallique (134) souhaitée.

19. Dispositif (122) destiné à commander un système de production (132) d'une usine de transformation, dans lequel le dispositif comprend un processeur (124) et une mémoire (128) incluant des instructions de programme, dans lequel l'exécution des instructions de programme (130) commande le système de production (132) de l'usine de transformation de manière à :
- recevoir un premier dossier de données (112), dans lequel le premier dossier de données est attribué au matériau fini (116 ; 222), dans lequel le matériau fini (116 ; 222) est divisé logiquement dans sa direction longitudinale en une pluralité de premiers segments (118), dans lequel le premier dossier de données, pour chacun des premiers segments (118), inclut des premières données physiques (228) caractérisant le segment ; et
- travailler le matériau fini (116 ; 222) en utilisant un processus de transformation pour obtenir la pièce à travailler métallique (134) souhaitée, dans lequel le processus de transformation est au moins partiellement commandé sur la base des premières données physiques (228) caractérisant les premiers segments (118) qui sont logiquement attribués au matériau fini (116 ; 222),
dans lequel un ensemble de spécifications de fabrication (238) est fourni, dans lequel chacune des spécifications de fabrication (238) comprend des premières données physiques (228) de pièces à travailler métalliques à produire par le processus de transformation, dans lequel la commande du processus de transformation comprend les étapes consistant à :
- évaluer, en comparant les premières données physiques (228) incluses dans le premier dossier de données avec les premières données physiques incluses dans les spécifications de fabrication (238), lesquelles pièces à travailler métalliques à produire pouvant être produites par le travail du matériau fini (116 ; 222) en utilisant le processus de transformation ; et
- sélectionner la pièce à travailler métallique (134) souhaitée parmi les pièces à travailler métalliques pouvant être produites pour le travail en utilisant le processus de transformation,
**caractérisé en ce que**
- le travail du matériau fini (116 ; 222) comprend une étape consistant à collecter des deuxièmes données physiques (208) de ces premiers segments (118) qui sont logiquement attribuées au matériau fini (116 ; 222) à travailler, et
- les premières données physiques (228) sont vérifiées du point de vue de leur plausibilité en utilisant les deuxièmes données physiques (208),
- sur la base de la vérification de plausibilité (240), les systèmes de mesure (224), par lesquels les premières et/ou deuxièmes données physiques (208) ont été collectées, sont optimisés, ou dans lequel sur la base de la vérification de plausibilité (240), un travail de matériau fini (116 ; 222) supplémentaire à produire par laminage à chaud est adapté ou interrompu.

20. Dispositif selon la revendication 19, dans lequel l'évaluation comprend une étape consistant à déterminer les parties du matériau fini (116 ; 222) à partir desquelles les pièces à travailler métalliques à produire peuvent être produites, dans lequel le travail du matériau fini (116 ; 222) comprend un travail de la partie du matériau fini (116 ; 222) déterminé par rapport à la pièce à travailler métallique (134) souhaitée.

21. Produit de programme informatique comprenant des instructions, exécutables par un processeur, pour commander le procédé selon l'une quelconque des revendications précédentes.
